# EUROPEAN PATENT APPLICATION

(11) **EP 1 785 836 A2**
(43) Date of publication of application: **16.05.2007**
(21) Application number: 06255172.6
(22) Date of filing: 06.10.2006
(51) Int. Cl.: G06F 3/06

(54) **Information processing apparatus for recording of file system information, information processing method, and computer program**

(30) Priority: 26.10.2005 JP 2005310826
(71) Applicant: SONY CORPORATION, Tokyo 141 (JP)
(72) Inventor: Ito, Ryogo, Sony Corporation, Tokyo 141 (JP); Yokota, Junichi, Sony Corporation, Tokyo 141 (JP); Shimond, Hiroshi, Sony Corporation, Tokyo 141 (JP); Watanabe, Katsuhiko, Sony Corporation, Tokyo 141 (JP); Imai, Kenichiro, Sony Corporation, Tokyo 141 (JP); Kobayashi, Kou, Sony Corporation, Tokyo 141 (JP)
(74) Representative: Robinson, Nigel Alexander Julian

(57) **Abstract**

An information processing apparatus includes a recording control unit configured to control recording of information on an information recording medium and recording of file system information corresponding to a file storing the recorded information. The recording control unit performs a sequential recording process of the file system information by switching between two modes of writing information on the information recording medium in accordance with a preset condition. The two modes include (a) a normal write mode where the file system information is not preferentially recorded; and (b) an immediate write mode where the file system information is preferentially recorded.

## Description

The present invention relates to an information processing apparatus, an information processing method, and a computer program. More specifically, the present invention relates to an information processing apparatus, an information processing method, and a computer program that record file system information or an information recording medium, such as a hard disk.

For example, when information is to be recorded on a medium (information recording medium), such as a hard disk, in a digital video camera or other types of information processing apparatuses, management information of a recorded data file, e.g., file system information including a FAT (file allocation table) and a directory entry is also written and updated.

Examples of the FAT include FAT16 and FAT32. These file systems manage recording position information and recording position chain information about respective data files recorded on a medium (information recording medium). A usage configuration of the FAT is described in Patent Document 1 (Japanese Unexamined Patent Application Publication No. 2005-141335), for example. The directory entry is file attribute information including the name (file name), date and time of generation, and starting cluster number information used for access of each file recorded on an information recording medium.

Recently, a hard disk has often been used as a data recording medium in digital video cameras and other types of information processing apparatuses, due to miniaturization of the hard disk. However, if the apparatus is dropped, the head of the hard disk or a magnetic disk is damaged and it may become impossible to read data therefrom. In order to prevent such a problem, mobile apparatuses provided with a hard disk typically include a drop detecting unit, such as an acceleration sensor. If the sensor detects a drop, power to the hard disk is shut off so that the head is brought into a save state.

With this process, the hard disk is protected from being damaged and a state where data cannot be read can be avoided. However, such a power-off is performed as an emergency measure. If the power-off occurs during recording of data, a data recording error with respect to an information recording medium may occur. Some countermeasures against a writing error have been suggested for real data, but countermeasures against a writing error for file system information, such as FAT information and a directory entry, have not adequately been made under the present circumstances.

The present invention has been made in view of the above-described problems and is directed to providing an information processing apparatus, an information processing method, and a computer program that are capable of recoding file system information more reliably on an information recording medium, such as a hard disk, and minimizing recording errors occurring at power-off or the like.

Various aspects of the invention are set out in the accompanying claims.

According to at least a preferred embodiment of the present invention, there is provided an information processing apparatus including a recording control unit configured to control recording of information on an information recording medium and recording of file system information corresponding to a file storing the recorded information. The recording control unit performs a sequential recording process of the file system information by switching between two modes of writing information on the information recording medium in accordance with a preset condition. The two modes include (a) a normal write mode where the file system information is not preferentially recorded; and (b) an immediate write mode where the file system information is preferentially recorded.

The recording control unit may perform the sequential recording process of the file system information by switching the mode from the normal write mode to the immediate write mode on the basis of at least any of a count value, indicating the number of data recording commands issued from start of the normal write mode, and a timer value, indicating elapsed time from start of the normal write mode.

The recording control unit may compare a threshold that varies depending on the type of information recorded on the information recording medium with at least any of the count value and the timer value, and switch the mode from the normal write mode to the immediate write mode in accordance with the comparison result.

In the immediate write mode, the recording control unit may control a write process of the file system information on the information recording medium and perform a cache flash process to complete writing information stored in a cache in an information recording medium driving unit on the information recording medium.

The recording control unit may switch the mode to the normal write mode after performing the write process of the file system information on the information recording medium in the immediate write mode and the cache flash process.

In the immediate write mode, the recording control unit may perform a write process of the file system information on the information recording medium, the file system information including a file allocation table and a directory entry.

The recording control unit may hold file size information indicating the size of file written on the information recording medium. The recording control unit may perform a file seek at restart of writing information after a pause of writing information on the basis of the file size information at completion of the last immediate write mode before the pause, so as to ensure the continuity at an information writing position.

The information processing apparatus may further include a buffer configured to temporarily store data to be recorded on the information recording medium; and an application executing unit configured to output an execution command of an information recording process on the information recording medium. The application executing unit may hold a pointer indicating a data recording end position at completion of the immediate write mode, the pointer corresponding to the data stored in the buffer, and may perform a process by using the pointer as a write start position at restart of writing information after a pause of an information writing process.

The recording control unit may write management information on the information recording medium by applying the immediate write mode.

The recording control unit may set the immediate write mode when opening a file in which information is to be recorded, and may perform a cache flash process to complete writing information stored in a cache in an information recording medium driving unit on the information recording medium during a file closing process.

The recording control unit may set the immediate write mode and perform setting so as to prohibit use of a cache in an information recording medium driving unit when opening a file in which information is to be recorded, and may perform control so that information is written without using the cache.

According to another at least preferred embodiment of the present invention, there is provided an information processing method including the step of controlling recording of information on an information recording medium and recording of file system information corresponding to a file storing the recorded information. The recording control step performs a sequential recording process of the file system information by switching between two modes of writing information on the information recording medium in accordance with a preset condition. The two modes include (a) a normal write mode where the file system information is not preferentially recorded; and (b) an immediate write mode where the file system information is preferentially recorded.

The recording control step may include the step of performing the sequential recording process of the file system information by switching the mode from the normal write mode to the immediate write mode on the basis of at least any of a count value, indicating the number of data recording commands issued from start of the normal write mode, and a timer value, indicating elapsed time from start of the normal write mode.

The recording control step may include the step of comparing a threshold that varies depending on the type of information recorded on the information recording medium with at least any of the count value and the timer value, and switching the mode from the normal write mode to the immediate write mode in accordance with the comparison result.

In the immediate write mode, the recording control step may include the step of controlling a write process of the file system information on the information recording medium and performing a cache flash process to complete writing information stored in a cache in an information recording medium driving unit on the information recording medium.

The recording control step may include the step of switching the mode to the normal write mode after performing the write process of the file system information on the information recording medium in the immediate write mode and the cache flash process.

In the immediate write mode, the recording control step may include the step of performing a write process of the file system information on the information recording medium, the file system information including a file allocation table and a directory entry.

The recording control step may include the step of holding file size information indicating the size of file written on the information recording medium, and performing a file seek at restart of writing information after a pause of writing information on the basis of the file size information at completion of the last immediate write mode before the pause, so as to ensure the continuity at an information writing position.

The information processing method may further include the steps of: holding a pointer indicating a data recording end position at completion of the immediate write mode, the pointer corresponding to a buffer temporarily storing data to be recorded on the information recording medium; and performing a process by using the pointer as a write start position at restart of writing information after a pause of an information writing process.

The information processing method may further include the step of writing management information on the information recording medium by applying the immediate write mode.

The information processing method may further include the step of setting the immediate write mode when opening a file in which information is to be recorded and performing a cache flash process to complete writing information stored in a cache in an information recording medium driving unit on the information recording medium during a file closing process.

The information processing method may further include the step of setting the immediate write mode and performing setting so as to prohibit use of a cache in an information recording medium driving unit when opening a file in which information is to be recorded, and writing information without using the cache.

According to another at least preferred embodiment of the present invention, there is provided a computer program allowing an information processing apparatus to control an information recording process. The program includes the step of controlling recording of information on an information recording medium and recording of file system information corresponding to a file storing the recorded information. The recording control step performs a sequential recording process of the file system information by switching between two modes of writing information on the information recording medium in accordance with a preset condition. The two modes include (a) a normal write mode where the file system information is not preferentially recorded; and (b) an immediate write mode where the file system information is preferentially recorded.

The computer program according to the embodiment of the present invention can be provided via a storage medium (e.g., a CD, an FD, or an MO) or a communication medium (e.g., a network), which is provided to a multi-purpose computer system capable of performing various program codes in a computer-readable manner. By providing this program in a computer-readable manner, a process according to the program can be realized in the computer system.

Further features of the present invention will become apparent from the following description of exemplary embodiments with reference to the attached drawings. In this specification, the system means a logical set of a plurality of apparatuses, and the apparatuses need not always be placed in the same package.

According to an at least preferred embodiment of the present invention, a sequential recording process of file system information is performed by switching between two modes of writing information on an information recording medium in accordance with a preset condition, the two modes including (a) a normal write mode where the file system information is not preferentially recorded; and (b) an immediate write mode where the file system information is preferentially recorded. For example, the sequential recording process of the file system information is performed by switching the mode from the normal write mode to the immediate write mode on the basis of at least any of a count value, indicating the number of data recording commands issued from start of the normal write mode, and a timer value, indicating elapsed time from start of the normal write mode. With this configuration, even if power-off occurs due to a drop of the apparatus, a state where no file system information (e.g., a FAT and a directory entry) is written can be prevented, and a data recording process can be performed while minimizing recording errors.

Embodiments of the invention will now be described, by way of example only, with reference to the accompanying drawings in which:
Figs. 1A and 1B illustrate data configurations of FAT16 and FAT32 formats;
Figs. 2A and 2B illustrate data configurations of a master boot record (MBR) and a partition table;
Fig. 3 illustrates a configuration of a directory entry generated for each file;
Fig. 4 illustrates an example of a data configuration of a typical file allocation table (FAT);
Fig. 5 illustrates a system configuration of an information processing apparatus according to an example embodiment of the present invention;
Fig. 6 illustrates the system configuration of the information processing apparatus shown in Fig. 5 more specifically;
Fig. 7 illustrates a typical information recording processing sequence according to a known art;
Fig. 8 illustrates the typical information recording processing sequence according to the known art;
Figs. 9A and 9B illustrate thresholds applied to change write modes in an information recording process performed by the information processing apparatus;
Fig. 10 is a flowchart illustrating a file opening process performed in the information recording process by the information processing apparatus;
Fig. 11 is a flowchart illustrating a mode switching process performed in the information recording process by the information processing apparatus;
Fig. 12 is a flowchart illustrating a mode switching process performed in the information recording process by the information processing apparatus;
Fig. 13 illustrates an information recording processing sequence performed by the information processing apparatus;
Fig. 14 illustrates the information recording processing sequence performed by the information processing apparatus;
Fig. 15 illustrates the information recording processing sequence performed by the information processing apparatus;
Fig. 16 is a flowchart illustrating a process of shutting off power to an information recording medium driving unit in the information processing apparatus;
Fig. 17 illustrates an example of setting a pointer of recording data in the information processing apparatus;
Fig. 18 illustrates an information recording processing sequence performed by the information processing apparatus;
Fig. 19 illustrates the information recording processing sequence performed by the information processing apparatus;
Figs. 20A and 20B are flowcharts illustrating a file opening process and a file closing process performed in a management information recording process by the information processing apparatus;
Figs. 21A and 21B are flowcharts illustrating a file opening process and a file closing process performed in the management information recording process by the information processing apparatus;
Fig. 22 illustrates a management information recording processing sequence performed by the information processing apparatus;
Fig. 23 illustrates the management information recording processing sequence performed by the information processing apparatus;
Fig. 24 illustrates an example of a configuration of a digital video camera, which is an example of the information processing apparatus; and
Fig. 25 illustrates an example of a configuration of a personal computer, which is another example of the information processing apparatus.

Hereinafter, an information processing apparatus, an information processing method, and a computer program according to an embodiment of the present invention are described in detail with reference to the drawings. The description is made in accordance with the following items.
1. Outline of file system
2. System configuration of information processing apparatus
3. Details of information recording process performed by information processing apparatus
   (3.1) Typical information recording process according to known art
   (3.2) Information recording process performed by information processing apparatus according to an embodiment of the present invention
4. Examples of configuration of information processing apparatus

### <1. Outline of file system>

As described above, when information is to be recorded on a medium (information recording medium), such as a hard disk, in a digital video camera, a PC (personal computer), or other information processing apparatuses, a process is performed by applying management information of a recorded data file, e.g., a FAT (file allocation table). Examples of the FAT include FAT16 and FAT32. These file systems manage recording position information and recording position chain information about each data file recorded on a medium (information recording medium). The details of the FAT16/32 are described in, for example, "Microsoft Extensible Firmware Initiative FAT32 File System Specification".

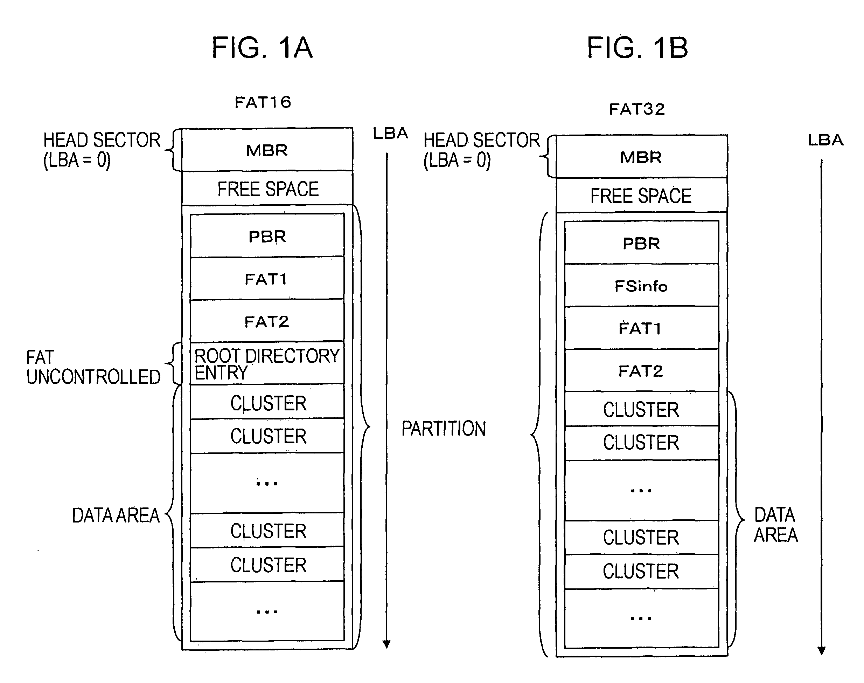

Hereinafter, configurations of data formatted by FAT16 and FAT32 in a case where a partition is provided in a hard disk are described with reference to Figs. 1A and 1B. Fig. 1A shows a format of FAT16 and Fig. 1B shows a format of FAT32.

As shown in Fig. 1A, the data configuration of FAT16 includes, from a head sector (LBA=0), a master boot record (MBR), a partition boot record (PBR), a file allocation table 1 (FAT1), a file allocation table 2 (FAT2), a root directory entry, and a plurality of clusters serving as a data area.

As shown in Fig. 1B, the data configuration of FAT32 includes, from a head sector (LBA=0), a master boot record (MBR), a partition boot record (PBR), file system information (FSinfo), a file allocation table 1 (FAT1), a file allocation table 2 (FAT2), and a plurality of clusters serving as a data area.

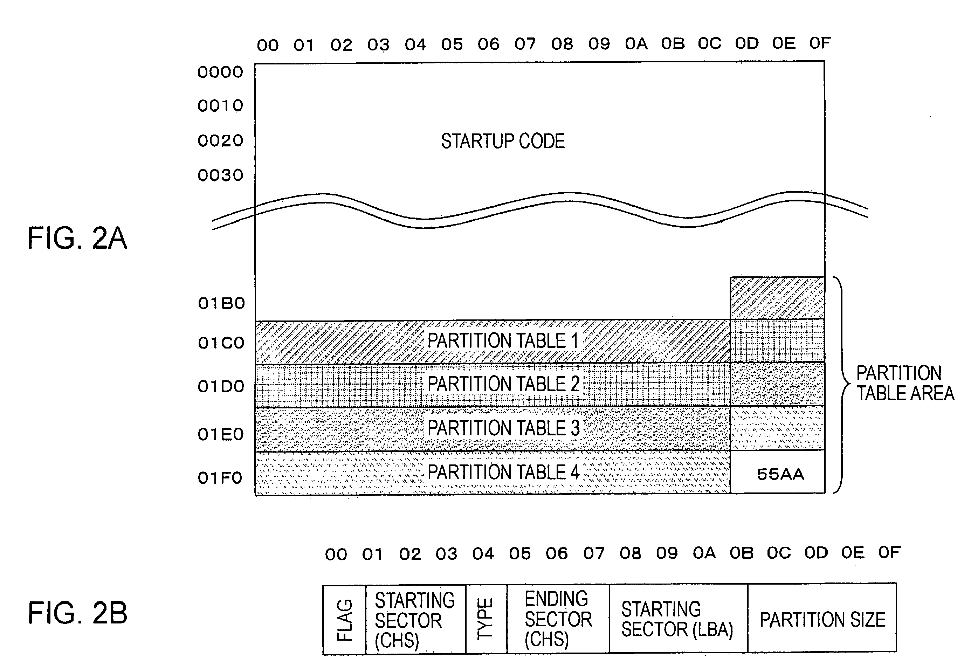

As shown in Fig. 2A, the master boot record (MBR) holds startup information and partition information, that is, partition tables including start addresses and size information of respective partitions. Although only one partition is provided in the data configurations of FAT16 and FAT32 shown in Figs. 1A and 1B, a recording medium such as a hard disk can be managed while being divided into a plurality of partitions. In that case, as shown in Figs. 2A and 2B, partition tables including start addresses and size information of the respective partitions are set.

At startup, a startup code (program) is read from a startup code area of the MBR. The read startup code of the MBR refers to the partition tables in a partition table area placed just after the startup code shown in Fig. 2A, and reads information of a boot sector of a desired partition, so that an OS (operating system) is started by a code (program) of the boot sector.

A plurality of partition tables (e.g., four tables) can be provided. As described above, each partition table holds information about the position (start address) and size (partition size) of each of partition area formed by dividing a recording area of a hard disk. A sign to the partition table is attached in 2 bytes (OE, OF) after the partition table area.

Fig. 2B shows a data configuration of a partition table having a data length of 16 bytes (128 bits). An area of 8 bytes from a 0th byte to a 7th byte is a storage area for information used to specify an address in a CHS method, and an area of 8 bytes from an 8th byte to a 15th byte is a storage area for information used to specify an address in an LBA method.

In the CHS method, an address (position) on a recording medium (hard disk) is specified by using three parameters: cylinder, head, and sector as a set. On the other hand, in the LBA method, numbers (block addresses (logical addresses)) from 0 (zero) are assigned to respective accessible unit blocks (e.g., units of sectors) on a recording area of a hard disk, so that an address (position) on the recording area of the hard disk is specified by specifying a corresponding number.

As shown in Fig. 2B, the storage area for information used for access in the CHS method includes the following areas. 0th byte: a storage area for active flag information (hereinafter referred to simply as flag information); 3 bytes from 1st byte to 3rd byte: a storage area for starting sector information used for access in the CHS method; 4th byte: a storage area for partition type information (hereinafter referred to simply as type information); and 3 bytes from 5th byte to 7th byte: a storage area for ending sector information used for access in the CHS method.

Also, as shown in Fig. 2B, the storage area for information used for access in the LBA method includes the following areas. 4 bytes from 8th byte to 11th byte: a storage area for starting sector information used in the LBA method; and 4 bytes from 12th byte to 15th byte: a storage area for a partition size used in the LBA method.

In the CHS method, a physical configuration of a hard disk is used as is and three parameters (cylinder, head, and sector) are used to specify an address, so that a software process is complicated. On the other hand, in the LBA method, an address can be specified very easily by using a single parameter (block address). For this reason, the LBA method is the mainstream of a method for specifying an address in a hard disk. Also, in many of other recording media, such as various memory cards that have widely been used as so-called removable media, an address can be specified in the LBA method. Any of the CHS method and the LBA method can be applied in the information processing apparatus according to the embodiment of the present invention.

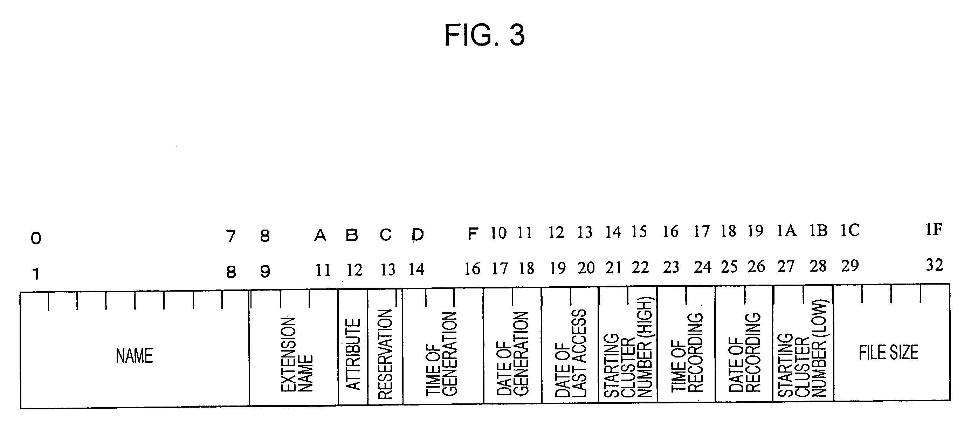

Management information including a file name and date/time of recording is set in each file recorded in the information recording medium. Fig. 3 shows a configuration of information stored in a directory provided in each partition, that is, a configuration of a directory entry generated for each file. The directory entry is information that is generated in a directory in accordance with a file generated in a partition, and manages detailed information of the generated file.

As shown in Fig. 3, the directory entry of each file includes a name (file name) field, an extension name field, an attribute field, a reservation field, a time-of-generation field, a date-of-generation field, a date-of-last-access field, a field of specifying information of a starting cluster number (high), a time-of-recording field, a date-of-recording field, a field of specifying information of a starting cluster number (low), and a file size field. These fields store corresponding information: file name, extension name, attribute, reservation, time of generation, date of generation, date of last access, starting cluster number (high), time of recording, date of recording, starting cluster number (low), and file size. By using the information in the directory entry, (1) the attribute; (2) the position of a starting cluster; (3) the size; (4) the date/time of generation; (5) the date/time of last access; and (6) the date/time of recording, of the file specified by the file name can be managed.

The starting cluster number is information to specify a cluster where recording of data of a file starts in a data area of a partition. In other words, the starting cluster number indicates a cluster where recording of data of the file starts among clusters in the data area of the partition. In this example, as shown in Fig. 3, the starting cluster number is managed while being divided into upper 2 bytes (high side) and lower 2 bytes (low side).

As shown in Fig. 1, the cluster is included in the data area and is a minimum unit capable of managing data in a FAT. The cluster includes a plurality of sectors and is a minimum recording unit in a file. One cluster includes n sectors (n=1, 2, 4, ··· 64, 128), the size of each sector being 512 bytes in a hard disk. The sector, which is a minimum unit of a hard disk, is too small to manage a file. Thus, a unit area called cluster including a plurality of sectors is used to easily manage the file. A specific size of the cluster is 32 kilobytes in FAT16 and is 4 kilobytes in FAT32, for example.

In the data configurations of FAT shown in Figs. 1A and 1B, the master boot record (MBR), described with reference to Fig. 2A, is followed by the partition boot record (PBR) including a startup code corresponding to the partition, the file allocation table 1 (FAT1), and the file allocation table 2 (FAT2). The file allocation table 2 (FAT2) is used as backup data of the file allocation table 1 (FAT1).

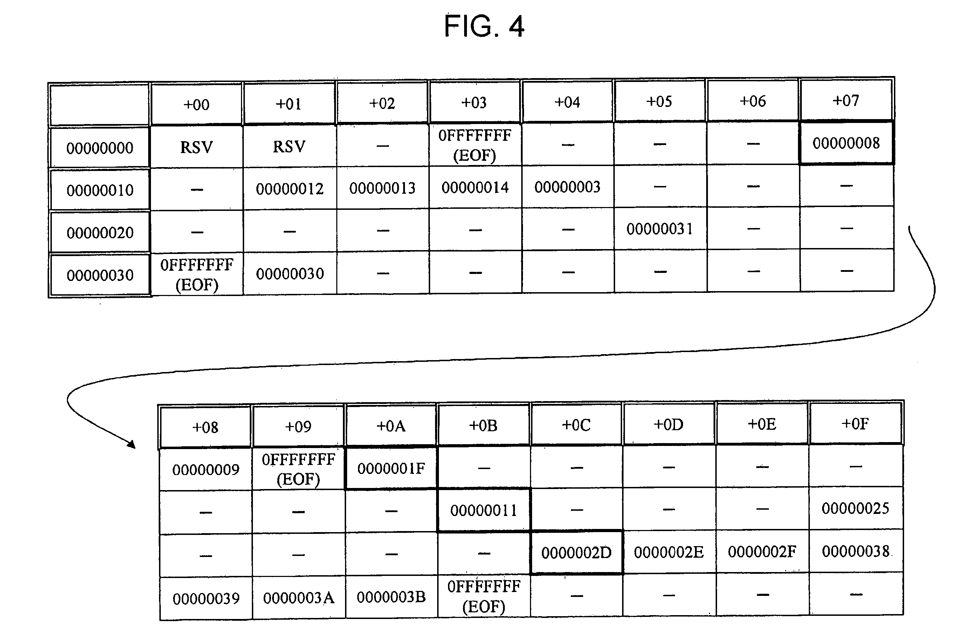

Now, an example of a data configuration of a typical file allocation table (FAT) is described with reference to Fig. 4. The FAT is a table to manage recording position information and recording position chain information of respective data files recorded on a medium (information recording medium).

As described above, data of each data file is recorded on an information recording medium while being distributed to one or more clusters. The FAT stores chain information of cluster numbers of clusters storing data of each file.

The FAT shown in Fig. 4 is divided into two parts. Double-lined items are indices, and the following cluster numbers are shown as data entry.
[00000000h] to [0000000Fh]
[00000010h] to [0000001Fh]
[00000020h] to [0000002Fh]
[00000030h] to [0000003Fh]
[h] is omitted in the table shown in Fig. 4. The [h] indicates that the cluster number represented by first eight digits of 0 to F is hexadecimal.

At a position of the cluster number of a cluster storing data of each file, the cluster number of a cluster storing next data is recorded. A code [0FFFFFFFh] indicating EOF (end of file) is recorded at a position of the last cluster. A starting cluster number is recorded in a directory entry of each file described with reference to Fig. 3.

For example, starting cluster numbers recorded in directory entries of respective files are as follows.
First file: 00000007h
Second file: 0000000Ah
Third file: 0000001Bh
Fourth file: 0000002Ch

Since the starting cluster number of the first file is [00000007h], first data of the first file can be obtained by reading the cluster of the cluster number [00000007h]. The cluster number of the cluster storing next data of the first file can be known on the basis of the information recorded at the position of the cluster number [00000007h] of the FAT shown in Fig. 4. A cluster number [00000008h] is recorded at the position of the cluster number [00000007h] of the FAT shown in Fig. 4, and thus it is determined that the cluster number of the cluster storing the next data of the first file is [00000008h], so that the next data can be read from the cluster of the cluster number [00000008h].

Likewise, the cluster number of a cluster storing next data of the first file is recorded at the position of the cluster number [00000008h] of the FAT shown in Fig. 4. A cluster number [00000009h] is recorded at the position of the cluster number [00000008h] of the FAT shown in Fig. 4, and thus it is determined that the cluster number of the cluster storing the next data of the first file is [00000009h], so that the next data can be read from the cluster of the cluster number [00000009h]. Then, information recorded at the position of the cluster number [00000009h] of the FAT is referred to in order to obtain the cluster number of a cluster storing next data. A code [0FFFFFFFh] corresponding to EOF (end of file) is recorded at the position, so that it is determined that no data follows.

As a result, it is determined that the data of the first file is stored in the clusters specified by the cluster numbers [00000007h], [00000008h], and [00000009h].

Likewise, it is determined that the data of the second file is stored in the clusters specified by the cluster numbers [000000OAh], [0000001Fh], [00000025h], [00000031h], and [00000030h].

Also, it is determined that the data of the third file is stored in the clusters specified by the cluster numbers [0000001Bh], [00000011h], [00000012h], [00000013h], [00000014h], and [00000003h].

Also, it is determined that the data of the fourth file is stored in the clusters specified by the cluster numbers [0000002Ch], [0000002Dh], [0000002Eh], [0000002Fh], [00000038h], [00000039h], [0000003Ah], and [0000003Bh].

Accordingly, the data can be obtained from these clusters.

The FAT shown in Fig. 4 is an example of data corresponding to FAT32. In FAT32, a code corresponding to EOF (end of file) is [OFFFFFFFh]. On the other hand, in FAT16, a code corresponding to EOF (end of file) is [FFFFh]. By detecting the code corresponding to the EOF, end of the file data can be determined.

As described above, each file recorded in an information recording medium has the following three elements:
(a) "directory entry" to hold a file name, date and time of generation, a file size, and so on;
(b) "FAT" to hold chain information of clusters; and
(c) "data (substance of file)" recorded in units of clusters. These elements are recorded on the information recording medium, such as a hard disk. The clusters in each file are identified on the basis of the "directory entry" and the "FAT", so that data can be read.

### <2. System configuration of information processing apparatus>

Hereinafter, a system configuration of an information processing apparatus performing the above-described processes is described. The processes of recording data on an information recording medium and obtaining or playing back data from the information recording medium are performed by a CPU (central processing unit) of the information processing apparatus, such as a digital video camera or a PC (personal computer), in accordance with a predetermined data processing program.

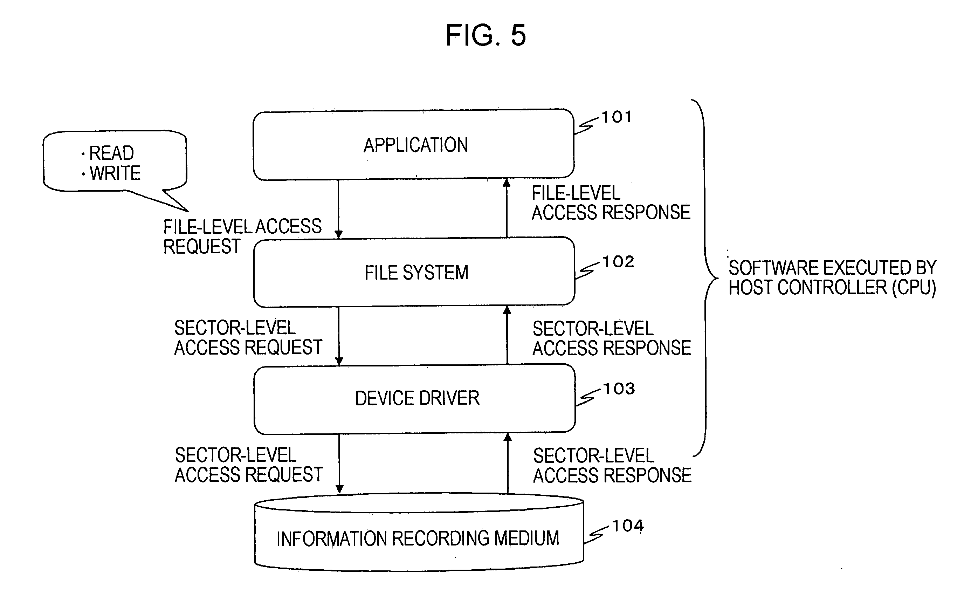

As shown in Fig. 5, when data is to be recorded on an information recording medium 104, such as a hard disk, or when data is to be read from the recording medium so as to be used, a file system (file managing program) 102 to manage files on the information recording medium 104 and a device driver 103 to control the information recording medium 104 on the basis of information from the file system 102 exist in a lower layer of an application program 101 serving as a contact with a user.

When data is to be recorded on the information recording medium 104 or when data is to be played back from the information recording medium 104, data is written or played back by the functions of the file system 102 and the device driver 103. As in a known art, the process is performed in the configuration of: file system ↔ device driver ↔ recording medium (hard disk).

If a plurality of different files are applied as continuously-recorded files during recording of data, a special code is recorded to a file allocation table (FAT) that is applied by the file system. If a plurality of different files are applied as continuously-recorded files during playback of data, the files are switched on the condition of detecting the special code from the FAT.

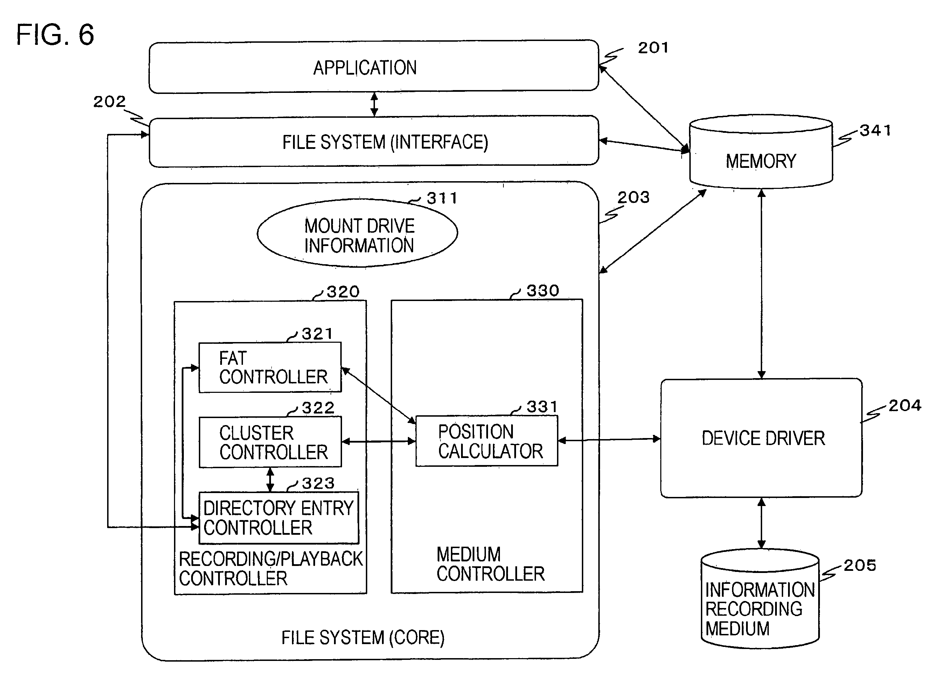

Fig. 6 shows the system configuration shown in Fig. 5 in which the details of the file system are shown. As Fig. 5, Fig. 6 shows the system configuration of the information processing apparatus to perform processes of recording data on an information recording medium and obtaining or playing back data from the information recording medium. Also, Fig. 6 shows the system configuration of the information processing apparatus to perform processes of recording data on an information recording medium 205, such as a hard disk, and reading data recorded on the recording medium and using the data. A file system (file managing program) to manage files on the information recording medium 205 is set in a lower layer of an application program 201 serving as a contact with a user. The file system includes a file system (interface) 202 and a file system (core) 203.

The file system (core) 203 transmits/receives data and commands to/from the application 201 via the file system (interface) 202. The file system (core) 203 controls a device driver 204 on the basis of information from the application 201 or the file system (interface) 202 and writes data and file system information on the information recording medium 205, updates the data and information, or reads the data and information.

The application 201, the file system (interface) 202, the file system (core) 203, and the device driver 204 access and use a memory 341, which serves as storage of programs and parameters used for processes in respective units and as a work area in data processing.

The file system (core) 203 holds mount drive information 311 including the type of a recording medium and format information and controls recording and playback of data in accordance with the drive information 311. The file system (core) 203 includes a recording/playback controller 320 to control recording and playback of data and a medium controller 330 to control a medium.

The recording/playback controller 320 includes a FAT controller 321 to record and refer to a FAT, a cluster controller 322 to determine a cluster as data recording position information and determine a playback position based on a cluster number, and a directory entry controller 323 to generate or refer to a directory entry (see Fig. 3) storing information corresponding to a file. The directory entry controller 323 obtains a directory entry corresponding to a specific file on the basis of a command from the application 201. For example, when a file is to be played back, the directory entry controller 323 obtains a starting cluster number from the directory entry and supplies it to the cluster controller 322.

The medium controller 330 includes a position calculator 331, controls the device driver 204 on the basis of cluster information determined by the cluster controller 322 or cluster chain information of a FAT, determines a position on a disk where data is to be recorded or played back on the basis of a cluster number, and records or plays back data from the position on the disk via the device driver 204 in accordance with the determined position information.

### <3. Details of information recording process performed by information processing apparatus>

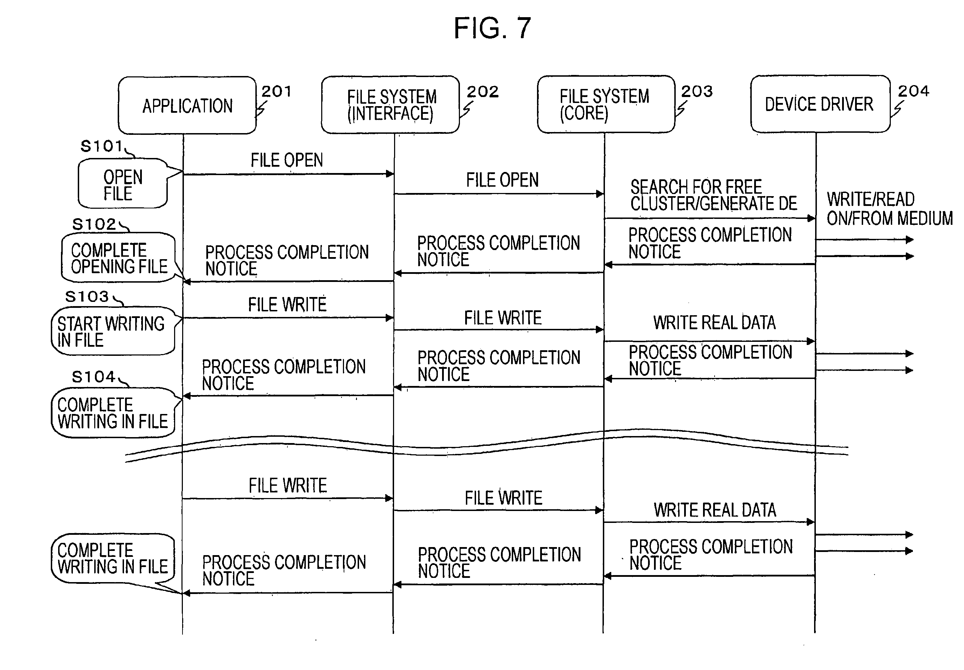

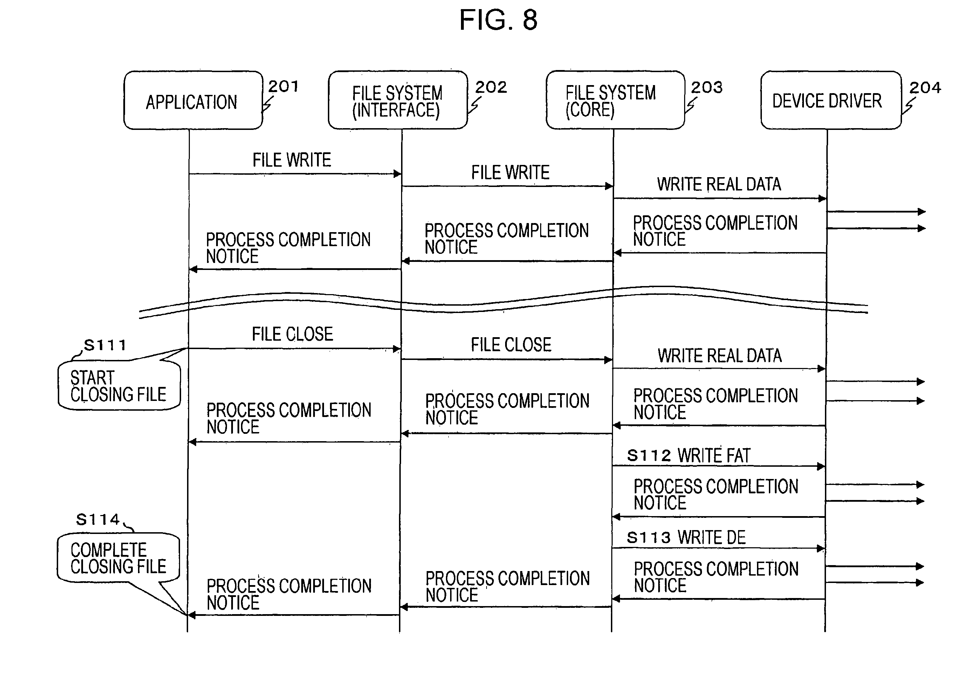

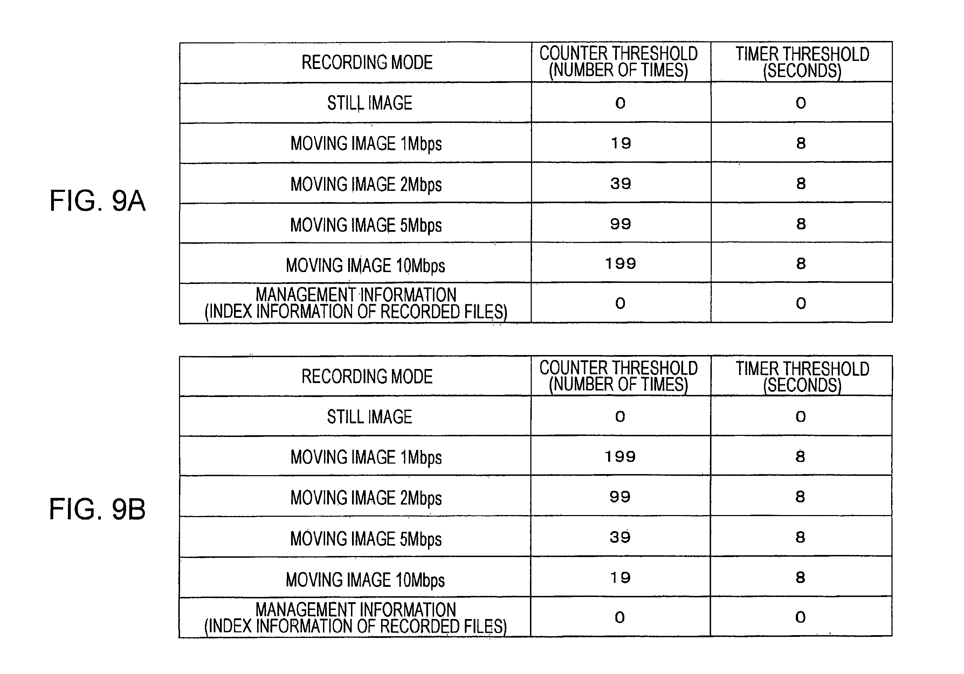

Hereinafter, a sequence of recording data on the information recording medium in the configuration shown in Fig. 6 is described. Before describing the sequence of a data recording process performed in the information processing apparatus according to the embodiment of the present invention, a sequence of a typical data recording process according to a known art is described with reference to Figs. 7 and 8. After that, the data recording process performed in the information processing apparatus according to the embodiment of the present invention is described in detail with reference to Figs. 9A and 9B and so on.

### (3.1) Typical information recording process according to known art

The sequence diagrams shown in Figs. 7 and 8 show, from the left, the application 201, the file system (interface) 202, the file system (core) 203, and the device driver 204, and also show a time-series sequence of transmitting commands and data among the respective elements.

When data is to be recorded, the application 201 outputs a file open command to the file system (interface) 202 and the command is further transmitted to the file system (core) 203 in step S101. The file system (core) 203 searches for a free cluster by applying the device driver 204 and generates a directory entry (DE) for a new file. As described above with reference to Fig. 3, a file name, a starting cluster number, and so on are recorded in the directory entry (DE).

After this process, a process completion notice is transmitted to the application 201, so that the file opening process completes in step S102. Then, in step S103, the application 201 starts writing data in the set file, that is, starts a file writing process. In this file writing process, too, the application 201 outputs a file write command to the file system (interface) 202, and the command is further transmitted to the file system (core) 203. The file system (core) 203 writes data on the set file by applying the device driver 204, that is, performs a file writing process. Then, a completion notice is transmitted to the application 201. Accordingly, the file writing process for one data write unit ends in step S104.

Then, data writing is continuously performed. After data writing in the file ends, the application 201 starts a file closing process in step S111 shown in Fig. 8. In the file closing process, after last real data has been written, a FAT writing process is performed in step S112 under control by the file system (core) 203. As described above with reference to Figs. 4 and 5, the FAT is constituted as data including chain information of cluster numbers of clusters storing data of a file.

In step S113, write of a directory entry (DE) is performed. Herein, FAT data and a directory entry corresponding to the file in which data has been written are written. The directory entry includes various attribute information corresponding to the file, as described above with reference to Fig. 3.

In step S114, completion of these processes is notified to the application 201 via the file system (interface) 202, so that the file closing process ends.

As can be understood from the sequence diagrams shown in Figs. 7 and 8, writing of real data in the set file is sequentially performed. That is, writing is repeated a plurality of times. The FAT serving as file system information is written on the information recording medium every time real data is written a plurality of times, e.g., every time the amount of data stored in a buffer set as a temporary storage area of real data exceeds a predetermined value. The directory entry (DE) serving as file system information is written on the information recording medium during the file closing process.

When a hard disk is used as an information recording medium and when a drop of the apparatus is detected, power to the hard disk is shut off to save the head as an emergency measure in order to prevent damage of the head of the hard disk or the disk.

If power to the hard disk as a recording medium is shut off during the data writing sequence described above with reference to Figs. 7 and 8, a file including some real data that has been written before the power-off is generated in the information recording medium. However, the FAT and directory entry as file system information corresponding to this file may be management information that does not reflect the real data in the file. Particularly, since the directory entry is written on the information recording medium during a file closing process, a file having no directory entry may be generated. This causes a problem that information about a file size and a starting cluster number may not be obtained.

The FAT information is intermittently recorded on the information recording medium. However, since the directory entry has no information, cluster chain information written in the FAT cannot be used. Thus, the real data written in clusters recorded in the FAT are set as unreadable clusters, that is, so-called "orphan clusters". In other words, many unreadable data are generated.

In order to prevent the generation of unreadable data, the information processing apparatus according to the embodiment of the present invention performs a data recording process in a sequence that is different from the data recording sequence described above with reference to Figs. 7 and 8.

### (3.2) Information recording process performed by information processing apparatus according to the embodiment of the present invention

Hereinafter, the information recording process performed in the information processing apparatus according to the embodiment of the present invention is described in detail.

In this information processing apparatus, the following two modes:
(a) normal write mode; and
(b) immediate write mode, are set as data recording modes. The file system (interface) 202 allows the file system (core) 203 to switch to the "immediate write mode" every time a predetermined condition is satisfied. In the normal write mode, the same recording process as that of the sequence shown in Figs. 7 and 8 is performed. In the "immediate write mode", file system information is written. If the mode is switched from the normal write mode to the immediate write mode, FAT information and a directory entry are written.

In the "immediate write mode", the file system (core) 203 writes file system information on the information recording medium. That is, updated latest FAT information and directory entry are written on the information recording medium.

After the file system information has been written on the information recording medium in the "immediate write mode", an internal cache set in an information recording medium driving unit, such as a HDD (hard disk drive), is flashed, that is, a cache flash process is performed to compete write of information recorded in the internal cache on the information recording medium. Accordingly, the FAT and directory entry (DE) information are reliably reflected on the information recording medium.

As described above, in the information processing apparatus according to the embodiment of the present invention, the file system (interface) 202 allows the file system (core) 203 to switch to the "immediate write mode" every time a predetermined condition is satisfied, and sequentially writes file system information, such as a FAT and a directory entry.

The predetermined condition includes, for example,
(a) a counter value, indicating the number of counted write requests issued by the application 201 since start of a data recording process in the normal write mode, becomes equal to or larger than a predetermined counter threshold; and
(b) elapsed time since start of a data recording process in the normal write mode becomes equal to or larger than a predetermined threshold. The file system (interface) 202 detects these states. If detecting the above-described (a) or (b) state, the file system (interface) 202 allows the file system (core) 203 to switch to the "immediate write mode", so as to sequentially write file system information, such as a FAT and a directory entry.

Now, an example of setting a condition to switch the mode from the normal write mode to the immediate write mode in the information processing apparatus according to the embodiment of the present invention is described with reference to Figs. 9A and 9B. In this information processing apparatus, as shown in Figs. 9A and 9B, different thresholds (counter thresholds and timer thresholds) are applied to switching of modes depending on the type of recorded data.

Figs. 9A and 9B show two different threshold setting tables. The threshold setting table shown in Fig. 9A is used when the mode is switched every data recording time of a predetermined unit, whereas the threshold setting table shown in Fig. 9B is used when the mode is switched every data recording size of a predetermined unit. In this way, the condition to switch the mode from the normal write mode to the immediate write mode can be variously set.

For example, when the mode is to be switched every data recording time of a predetermined unit, the mode is switched from the normal write mode to the immediate write mode in accordance with a threshold shown in Fig. 9A. In a still image recording process, both the counter threshold and timer threshold are 0 (zero), so that a process is performed constantly in the immediate write mode. In a moving image recording process, a threshold is set in accordance with a bit rate of recorded moving image. In a process of recording moving images of 1 Mbps, the mode is switched from the normal write mode to the immediate write mode when the counter value from start of the normal write mode becomes 19 or more or after 8 seconds set as the timer threshold have passed.

After file system information such as a FAT and a directory entry has been written on the information recording medium in the immediate write mode, the counter value and the timer value are reset, so that the mode returns to the normal write mode and recording of real data starts. When the counter value from start of the normal write mode becomes 19 or more or after 8 seconds set as the timer threshold have passed, the mode is switched from the normal write mode to the immediate write mode. This process is performed repeatedly.

When moving images of a high bit rate are to be recorded, a large counter threshold is set. In a process of recording moving images of 10 Mbps, the mode is switched from the normal write mode to the immediate write mode when the counter value from start of the normal write mode becomes 199 or more or after 8 seconds set as the timer threshold have passed. This is because, in recording of moving images of a high bit rate, write requests are frequently issued by the application. That is, if the mode is switched every data recording time of a predetermined unit and if the moving images to be recorded have a high bit rate, a large counter threshold is set and an immediate write process is reliably performed every predetermined time, so as to write a FAT and a directory entry.

The timer threshold is variable with respect to a bit rate. Basically, in this example, a process is controlled on the basis of a counter value, and file system information is written at predetermined intervals even if no data recording request is issued by the application 201. Also, during recording of a management information file (holding index information of each recorded file, for example) other than real data, such as moving image data and still image data, a process of writing a FAT and a directory entry occurs. In a process of writing such a file, both the counter threshold and the timer threshold are 0 (zero) as in recording of still images. In a process of recording still images, the process is performed constantly in the immediate write mode.

The threshold setting table shown in Fig. 9B is used when the mode is switched every data recording size of a predetermined unit. The counter threshold and the timer threshold for a process of recording still images or a management information file (holding index information of each recorded file, for example) are 0 (zero), as in the table shown in Fig. 9A, and the process is performed constantly in the immediate write mode.

In the threshold setting table shown in Fig. 9B, a small counter threshold is set when moving images of a high bit rate are recorded. According to the threshold setting table shown in Fig. 9B, an immediate write process is performed for every data recording size of a predetermined unit so that a FAT and a directory entry are written. In recording of moving images of a low bit rate, the number of write requests from the application required to record a predetermined amount of data is large. On the other hand, in recording of moving images of a high bit rate, the number of write requests from the application required to record a predetermined amount of data is small. In the threshold setting table shown in Fig. 9B, the mode is switched every time a predetermined size of data has been recorded, and the counter threshold becomes smaller as the bit rate becomes higher.

In the threshold setting table shown in Fig. 9B, as in the threshold setting table shown in Fig. 9A, the timer threshold is variable with respect to a bit rate. Basically, a process is controlled on the basis of the counter value, and file system information is written at predetermined intervals even if a data recording request is not issued by the application 201. When the counter value from start of the normal write mode becomes equal to or larger than a threshold or after 8 seconds set as a timer threshold have passed, the mode is switched from the normal write mode to the immediate write mode.

After file system information such as a FAT and a directory entry has been written on the information recording medium in the immediate write mode, the counter value and the timer value are reset, the mode returns to the normal write mode, and recording of real data starts. When the counter value from start of the normal write mode becomes equal to or larger than the threshold or after 8 seconds set as the timer threshold have passed, the mode is switched from the normal write mode to the immediate write mode. This process is repeatedly performed.

With the above-described process, recording of a FAT and a directory entry is sequentially performed. Even if power to the information recording medium, such as a hard disk, is shut off and recording of data is stopped, the amount of write error data of file system information, such as a FAT and a directory entry, is reduced. Accordingly, generation of the above-described orphan clusters can be minimized.

Hereinafter, a data recording sequence performed in the information processing apparatus according to the embodiment of the present invention is described. First, the following processes are described with reference to flowcharts.
(a) Process of opening a file
(b) Recording mode switching process based on only counter
(c) Recording mode switching process based on counter and timer

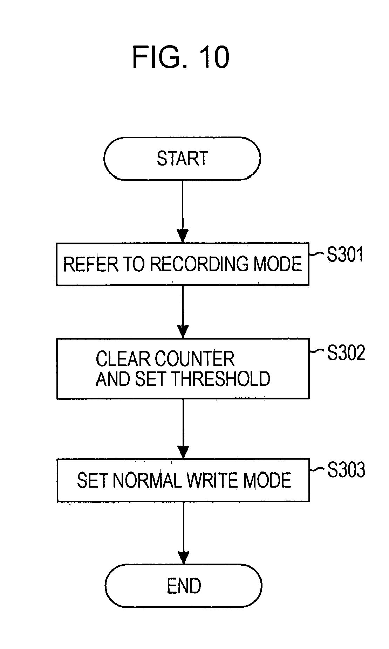

First, (a) process of opening a file is described with reference to the flowchart shown in Fig. 10. In the information processing apparatus according to the embodiment of the present invention, the file system (interface) 202 performs the process shown in Fig. 10 when opening a file in which data is to be written before recording data. In step S301, the file system (interface) 202 refers to a present recording mode. Recording mode information is set in a referable memory of the file system (interface) 202. The file system (interface) 202 records mode information in the memory every time the mode is changed.

In step S302, the file system (interface) 202 resets a counter value of a referable counter of the file system (interface) 202. This counter counts the number of write requests issued by the application 201 from start of a data recording process in the normal write mode, as described above.

In step S303, the file system (interface) 202 sets the normal write mode and starts a data recording process in the normal write mode.

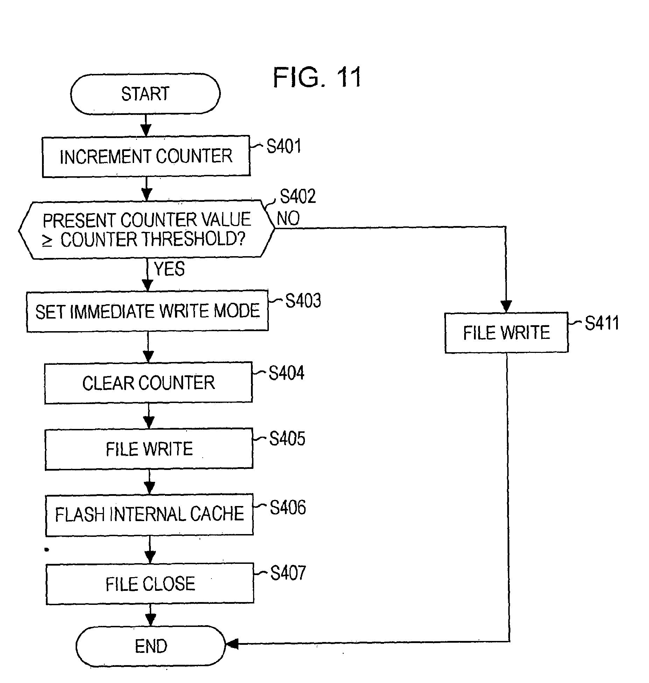

Next, a sequence of the recording mode switching process based on only the counter is described with reference to Fig. 11. This process is performed after the process of opening a file shown in Fig. 10. First, in step S401, the file system (interface) 202 counts the number of write requests issued by the application 201 after start of the data recording process in the normal write mode.

In step S402, the file system (interface) 202 compares the count value of the counter with a predetermined counter threshold. The threshold is included in the threshold data described above with reference to Figs. 9A and 9B. The threshold data is stored in the referable memory of the file system (interface) 202.

If it is determined in step S402 that the count value of the counter is smaller than the predetermined counter threshold, the process proceeds to step S411, where a data writing process, that is, file write, is performed in the normal write mode.

If it is determined in step S402 that the count value of the counter is equal to or larger than the predetermined counter threshold, the process proceeds to step S403, where the file system (interface) 202 allows the file system (core) 203 to switch to the immediate write mode. Then, the file system (interface) 202 resets the count value of the counter in step S404, and allows the file system (core) 203 to perform file write of writing file system information, such as a FAT and a directory entry, in step S405.

Then, in step S406, the file system (interface) 202 flashes the internal cache set in the information recording medium driving unit, such as a HDD, that is, performs a cache flash process to complete writing information recorded in the internal cache on the information recording medium. With this process, FAT and directory entry (DE) information can be reliably reflected on the information recording medium.

Then, in step S407, the file system (interface) 202 returns the mode from the immediate write mode to the normal write mode. The file system (interface) 202 repeatedly performs the process shown in Fig. 11 as long as data to be written in the opened file exists.

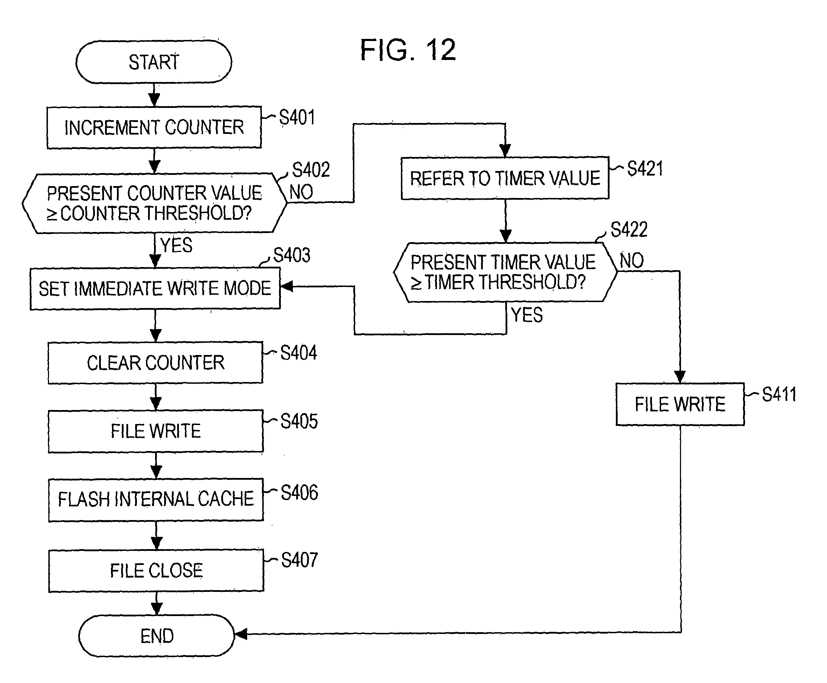

Next, a sequence of the recording mode switching process based on not only the counter but also the timer is described with reference to the flowchart shown in Fig. 12. In the flowchart shown in Fig. 12, the same steps as those shown in Fig. 11 are denoted by the same step numbers. This process is performed after the file opening process shown in Fig. 10. First, in step S401, the file system (interface) 202 counts the number of write requests issued by the application 201 after start of the data recording process in the normal write mode.

In step S402, the file system (interface) 202 compares the count value of the counter with a predetermined counter threshold. The threshold is included in the threshold data described above with reference to Figs. 9A and 9B. The threshold data is stored in the referable memory of the file system (interface) 202.

If it is determined in step S402 that the count value of the counter is smaller than the predetermined counter threshold, the process proceeds to step S421, where the file system (interface) 202 refers to a timer value. The timer measures the elapsed time after start of a data recording process in the normal write mode. Then, the process proceeds to step S422, where the file system (interface) 202 compares the timer value with a predetermined timer threshold. The timer threshold is included in the threshold data described above with reference to Figs. 9A and 9B. If the timer value is smaller than the predetermined timer threshold, the process proceeds to step S411, where a data writing process, that is, file write, is performed in the normal write mode.

If it is determined in step S402 that the count value of the counter is equal to or larger than the predetermined counter threshold, or if it is determined in step S422 that the timer value is equal to or larger than the predetermined timer threshold, the process proceeds to step S403, where the file system (interface) 202 allows the file system (core) 203 to switch to the immediate write mode. Then, the file system (interface) 202 resets the count value of the counter in step S404, and allows the file system (core) 203 to perform file write, which is a process of writing file system information such as a FAT and a directory entry, in step S405.

Then, in step S406, the file system (interface) 202 flashes the internal cache set in the information recording medium driving unit, such as a HDD, that is, performs a cache flash process to complete writing information recorded in the internal cache on the information recording medium. With this process, FAT and directory entry (DE) information can be reliably reflected on the information recording medium.

Then, in step S407, the file system (interface) 202 returns the mode from the immediate write mode to the normal write mode. The file system (interface) 202 repeatedly performs the process shown in Fig. 12 as long as data to be written in the opened file exists.

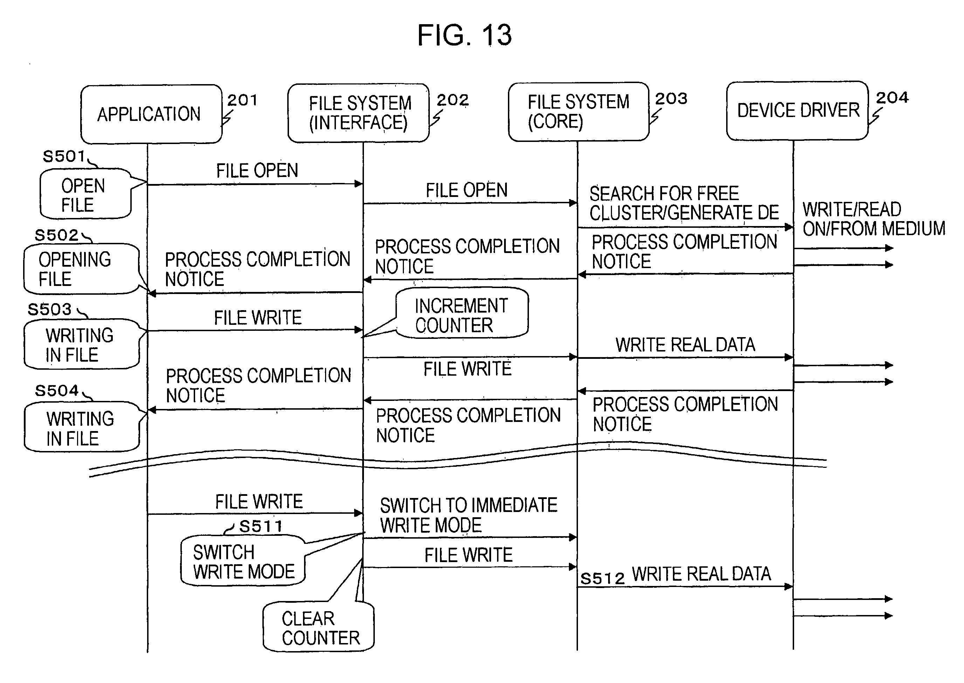

The information processing apparatus according to the embodiment of the present invention records data in accordance with any of the processes shown in Figs. 11 and 12. Hereinafter, an entire processing sequence of recording data performed by the information processing apparatus is described with reference to Figs. 13 to 15.

Each of the sequence diagrams shown in Figs. 13 to 15 shows, from the left, the application 201, the file system (interface) 202, the file system (core) 203, and the device driver 204, and also shows a time-series sequence of transmitting commands and data among the respective elements.

First, when data is to be recorded, the application 201 outputs a file open command to the file system (interface) 202 in step S501. Further, the command is transmitted to the file system (core) 203. The file system (core) 203 searches for a free cluster by applying the device driver 204 and generates a directory entry (DE) for a new file. As described above with reference to Fig. 3, a file name, a starting cluster number, and so on are recorded in the directory entry (DE).

After this process, a process completion notice is transmitted to the application 201, so that the file opening process completes in step S502. Then, in step S503, the application 201 starts a file write process of writing data in the set file. In the file write process, the application 201 outputs a file write command to the file system (interface) 202. Furthermore, the command is transmitted to the file system (core) 203. The file system (core) 203 performs a file write process of writing data in the set file by applying the device driver 204, and then a completion notice is transmitted to the application 201. In step S504, the file write process of one data write unit ends. At this time, the file system (interface) 202 increments the counter by one, that is, performs step S401 in the process shown in Fig. 11 or 12.

Then, data writing is continuously performed. In step S511, the file system (interface) 202 switches the write mode on the basis of a counter value or a timer value. The switching of the write mode is a process including comparison with a threshold and determination in accordance with the flowchart described above with reference to Fig. 11 or 12. At this process, the file system (interface) 202 clears the counter.

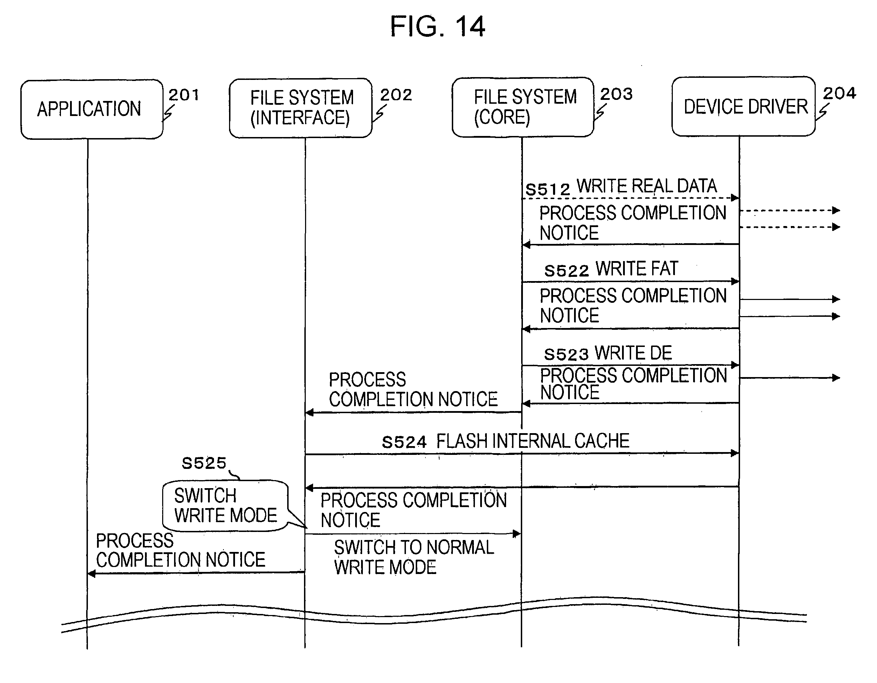

At the switching of the write mode, the file system (interface) 202 allows the file system (core) 203 to switch to the immediate write mode. The file system (core) 203 writes real data in the immediate write mode in step S512, and then writes file system information on the information recording medium in steps S522 and S523 shown in Fig. 14. That is, the updated latest FAT information (S522) and directory entry (S523) are written on the information recording medium.

After the file system information has been written, a process completion notice is transmitted to the file system (interface) 202. Then, the file system (interface) 202 flashes the internal cache in step S524. That is, the file system (interface) 202 performs a cache flash process to complete write of information recorded in the internal cache on the information recording medium. With this process, the FAT and the directory entry (DE) information can be reliably reflected on the information recording medium.

After the process, the file system (interface) 202 switches the mode from the immediate write mode to the normal write mode in step S525, and continues writing real data. At the switching of the mode, the counter and the timer are reset.

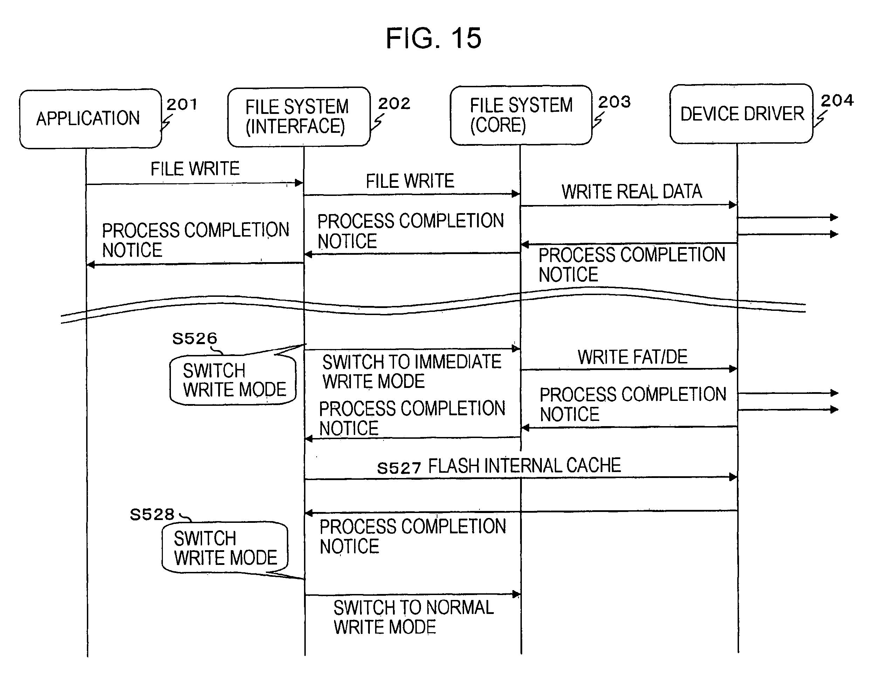

After data writing in the normal write mode has been continued, the write mode is switched again to the immediate write mode on the basis of the counter value or the timer value in step S526 shown in Fig. 15. Then, a FAT and a directory entry are written, a medium live cache flash process is performed, and the mode returns to the normal write mode. In this way, in the information processing apparatus according to the embodiment of the present invention, data recording progresses through repetition of the normal write mode and the immediate write mode.

With this process, recording of a FAT and a directory entry is sequentially performed. Therefore, even if the power to the information recording medium such as a hard disk is shut off and even if recording of data stops, the amount of write error data of file system information such as a FAT and a directory entry reduces. Accordingly, generation of the above described orphan clusters, that is, cluster data that is recorded as data constituting a file in the information recording medium but cannot be played back, can be minimized.

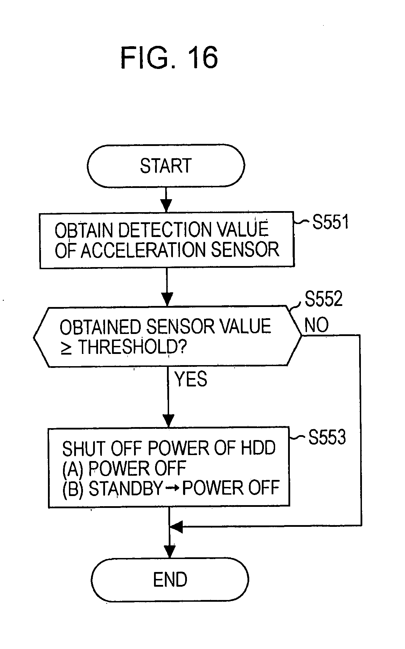

The information processing apparatus according to the embodiment of the present invention has such a configuration that data recording errors can be minimized when power to the information recording medium such as a hard disk is shut off. Hereinafter, an example of a sequence of a process of shutting off the power to the information recording medium such as a hard disk is described with reference to the flowchart shown in Fig. 16.

Typically, a mobile apparatus provided with a hard disk includes a drop detecting unit, such as an acceleration sensor. If the sensor detects a drop, power to the hard disk is shut off so that the head is brought into a save state. With this configuration, the hard disk can be protected against damage, and a state where data cannot be read can be avoided. The information processing apparatus performing such a process performs a process shown in Fig. 16. First, in step S551, a detection value of the acceleration sensor is obtained. In step S552, the obtained sensor value is compared with a threshold held as a drop determination threshold. If the obtained sensor value is equal to or larger than the threshold, it is determined that the apparatus has dropped and the process proceeds to step S553, where the power to the information recording medium driving unit (HDD) is shut off. Due to this shut-off, the power is turned off immediately or via a standby state. Accordingly, the head is brought into a save state, so that a collision between the head and the disk can be prevented.

In the information processing apparatus according to the embodiment of the present invention, even if the power is urgently shut off, file system information including a FAT and a directory entry is recorded on the information recording medium at predetermined intervals, so that orphan clusters from which data cannot be read can be minimized.

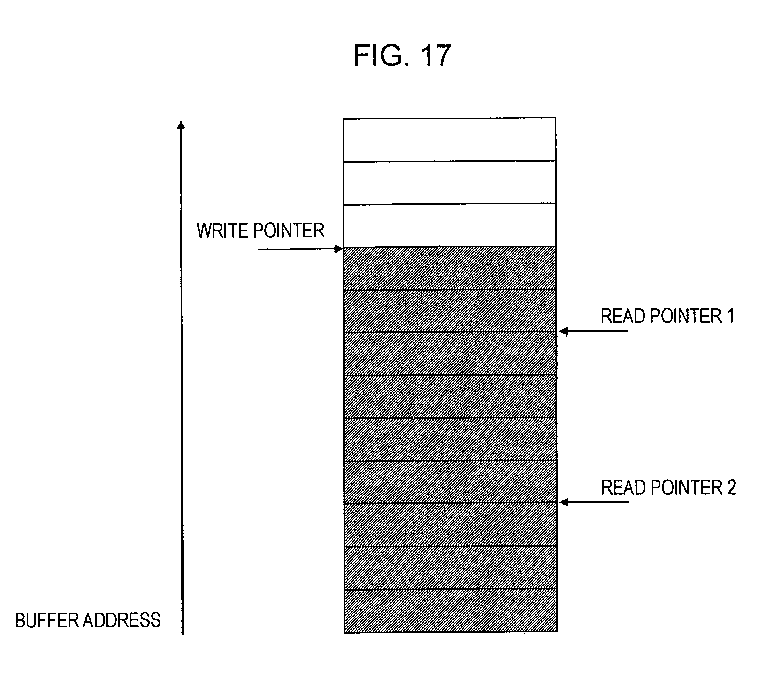

Hereinafter, a process sequence of restarting data recording after data recording has stopped due to power-off is described with reference to Fig. 17 and so on.

The application 201 to record moving or still images manages the pointers shown in Fig. 17 so as to accumulate data encoded as moving (or still) images in a buffer. Fig. 17 shows data accumulated in the buffer, the data being encoded data to be recorded.

A write pointer is a pointer that is incremented in synchronization with an encoding result; a read pointer 1 is a pointer that is incremented in synchronization with file write; and a read pointer 2 is a pointer indicating a position where write of file system information on the information recording medium in the immediate write mode and a cache flash process have completed in the file system (interface) 202. For example, if a data recording process is to be restarted after pause of data recording due to power-off, the application 201 provides a write command to the file system so that recording is restarted from the position indicated by the read pointer 2.

The file system (interface) 202 holds file size information [X] of a file written on the information recording medium at the end of the latest immediate write mode. At restart of recording, the file system (interface) 202 instructs the file system (core) 203 to perform file close → file open → file seek to the position X, so as to be ready for restarting recording. Accordingly, the continuity between the data written on the information recording medium before the end of the immediate write mode and the data to be written after restart of recording can be ensured.

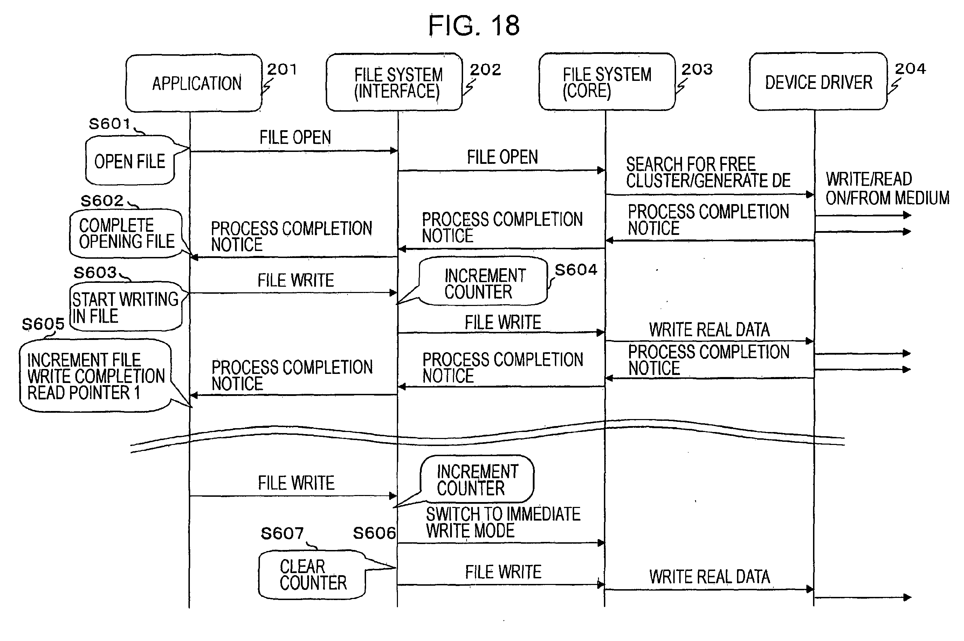

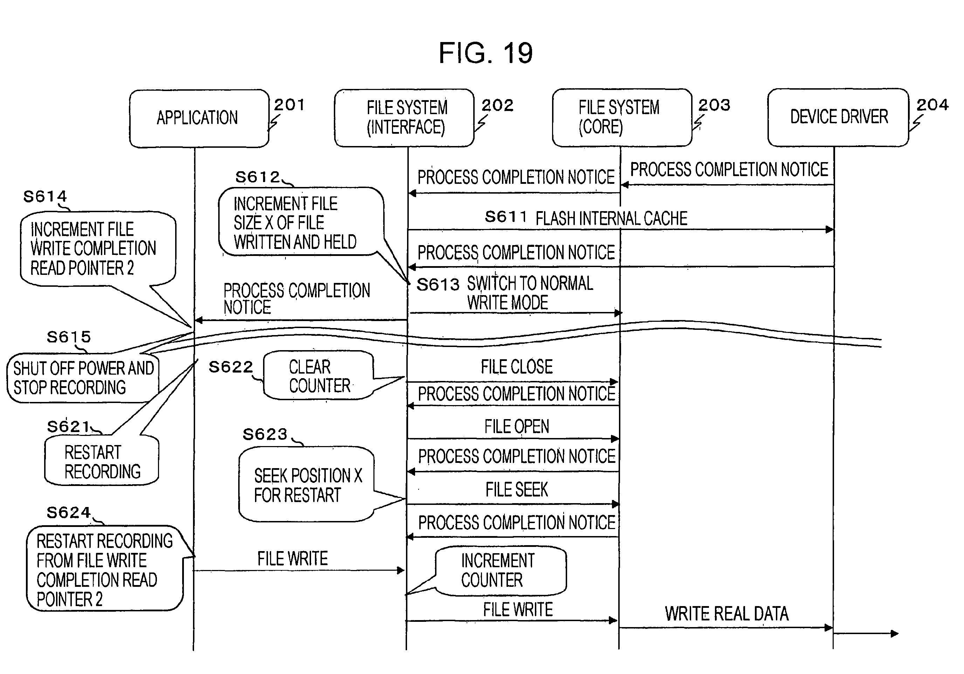

Hereinafter, a process sequence of restarting data recording after recording has stopped due to power-off is described with reference to Figs. 18 and 19. At restart of data recording, in step S601, the application 201 outputs a file open command to the file system (interface) 202, and the command is transmitted to the file system (core) 203. The file system (core) 203 searches for a free cluster by applying the device driver 204 and generates a directory entry (DE) for a new file. As described above with reference to Fig. 3, a file name, a starting cluster number, and so on are recorded in the directory entry (DE).

After the process, a process completion notice is transmitted to the application 201, and the file opening process completes in step S602. Then, the application 201 starts writing data in the set file, that is, a file write process, in step S603. In the file write process, the application 201 outputs a file write command to the file system (interface) 202, and the command is transmitted to the file system (core) 203. The file system (core) 203 performs the file write process, that is, writes data in the set file by applying the device driver 204. Then, a completion notice is transmitted to the application 201, so that the file write process of one data write unit ends.

During the file write process, the file system (interface) 202 increments the counter by one in step S604. In other words, the file system (interface) 202 performs step S401 shown in Fig. 11 or 12. Also, the application 201 increments the file write completion read pointer 1 shown in Fig. 17 in step S605.

After that, data writing is continuously performed. Then, in step S606, the file system (interface) 202 switches the write mode on the basis of the counter value or the timer value. This mode switching is a process including comparison with a threshold and determination in accordance with the flowchart shown in Fig. 11 or 12. At this process, the file system (interface) 202 clears the counter in step S607.

At the switching of the write mode, the file system (interface) 202 allows the file system (core) 203 to switch to the immediate write mode, and a FAT and a directory entry are written. The file system (interface) 202 performs a process of flashing an internal cache of the medium in step S611 in the immediate write mode. That is, the file system (interface) 202 performs a cache flash process to complete write of information recorded in the internal cache on the information recording medium.

Also, the file system (interface) 202 updates and holds file size information [X] of the file written on the information recording medium at the end of the immediate write mode in step S612. Then, in step S613, the file system (interface) 202 switches the mode to the normal write mode. The application 201 increments the file write completion read pointer 1 shown in Fig. 17 in step S614.

After this process, assume that power-off occurs due to drop of the apparatus in step S615 in the normal write mode and that recording is restarted in step S621. At restart of data recording, the file system (interface) 202 clears the counter in step S622, and allows the file system (core) 203 to perform a file closing process and a file opening process. Then, in step S623, the file system (interface) 202 refers to the file size information [X] of the file written on the information recording medium at the end of the last immediate write mode before the power-off and seeks the position X in the file.

On the other hand, the application 201 restarts data recording from the position of the read pointer 2 in step S624. As described above with reference to Fig. 17, the read pointer 2 is a pointer indicating the position where file system information has been written on the information recording medium in the immediate write mode and a cache flash process has completed in the file system (interface) 202. Accordingly, the continuity between the data written on the information recording medium until the end of the immediate write mode and the data to be written after restart of recording can be ensured.

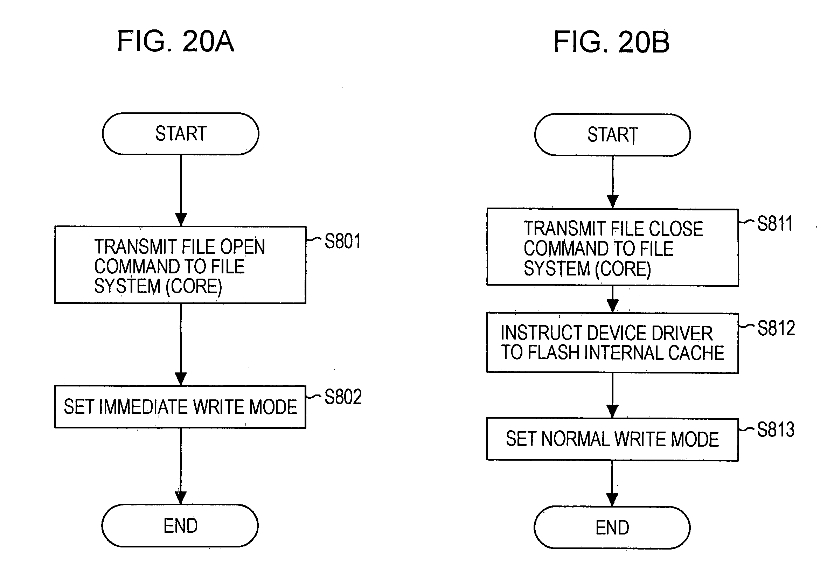

The data recording process performed in the information processing apparatus according to the embodiment of the present invention has been described above in detail. This recording sequence can be applied not only to write of file system information including a FAT and a directory entry accompanying a process of recording real data of moving or still images, but also to recording of a management information file holding reference information attached to moving image data or still image data. A process sequence of writing such a management information file is described below with reference to Figs. 20A and 20B and so on.

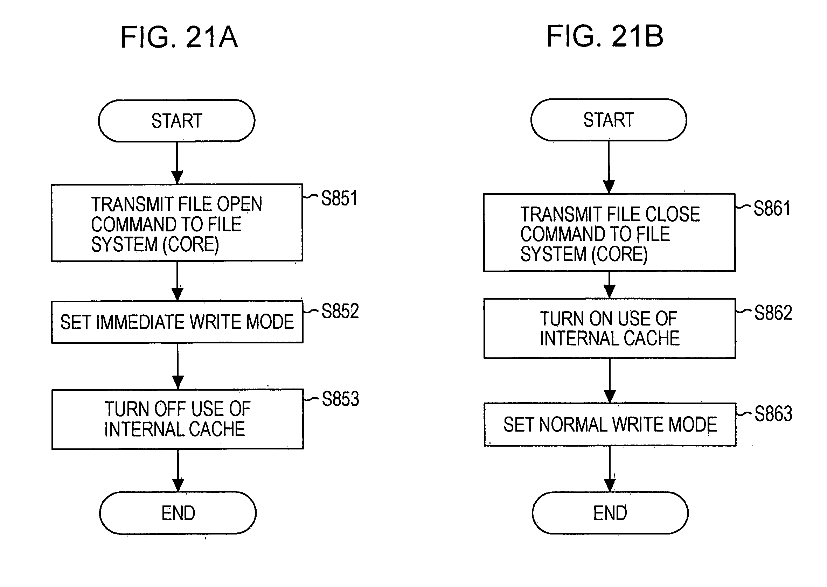

First, a procedure of file opening and file closing processes performed by the file system (interface) 202 of the information processing apparatus according to the embodiment of the present invention is described with reference to Figs. 20A to 21B. These processes are performed at recording of management information, such as index information of recorded files. Figs. 20A and 20B and Figs. 21A and 21B show two examples of file opening and file closing processes that can be performed in the information processing apparatus according to the embodiment of the present invention.

First, (a) file opening process and (b) file closing process as example 1 are described with reference to Figs. 20A and 20B. In the information processing apparatus according to the embodiment of the present invention, the file system (interface) 202 performs the process shown in Fig. 20A to open a file before recording a management information file including index information of recorded files. First, the file system (interface) 202 transmits a file open command to the file system (core) 203 in step S801, and then sets the immediate write mode in step S802.

After this process, write of management data (file write) is performed. That is, in this example, all management information is processed in the immediate write mode, and after the management information has been written, a FAT and a directory entry are reliably written.

Next, a file closing process is described with reference to Fig. 20B. In step S811, the file system (interface) 202 transmits a file close command to the file system (core) 203. Then, in step S812, the file system (interface) 202 instructs the device driver 204 to flash the internal cache in the medium. Then, in step S813, the file system (interface) 202 switches the mode to the normal write mode.

In this example, a FAT and directory entry (DE) information are reliably reflected on the information recording medium by performing a cache flash process to complete write of information recorded in the internal cache on the information recording medium at file closing.

Next, file opening and file closing processes of a management information file according to example 2 are described with reference to Figs. 21A and 21B. First, (a) file opening process is described. The file system (interface) 202 outputs a file open command to the file system (core) 203 in step S851, sets the immediate write mode in step S852, and turns off the use of the internal cache in the medium in step S853.

After this process, write of management data (file write) is performed. That is, in this example, management information is written without using the internal cache, and thus it can be prevented that a write error occurs due to loss of data in the internal cache at power-off.

Next, a file closing process according to this example is described with reference to Fig. 21B. The file system (interface) 202 outputs a file close command to the file system (core) 203 in step S861, turns on the use of the internal cache in step S862, and switches the mode to the normal write mode in step S863. With this process, normal write using the internal cache is performed in the normal write mode.

In the information processing apparatus according to the embodiment of the present invention, a process of writing management information, such as index information of recorded files, is performed in accordance with the process sequence shown in Figs. 20A and 20B or Figs. 21A and 21B.

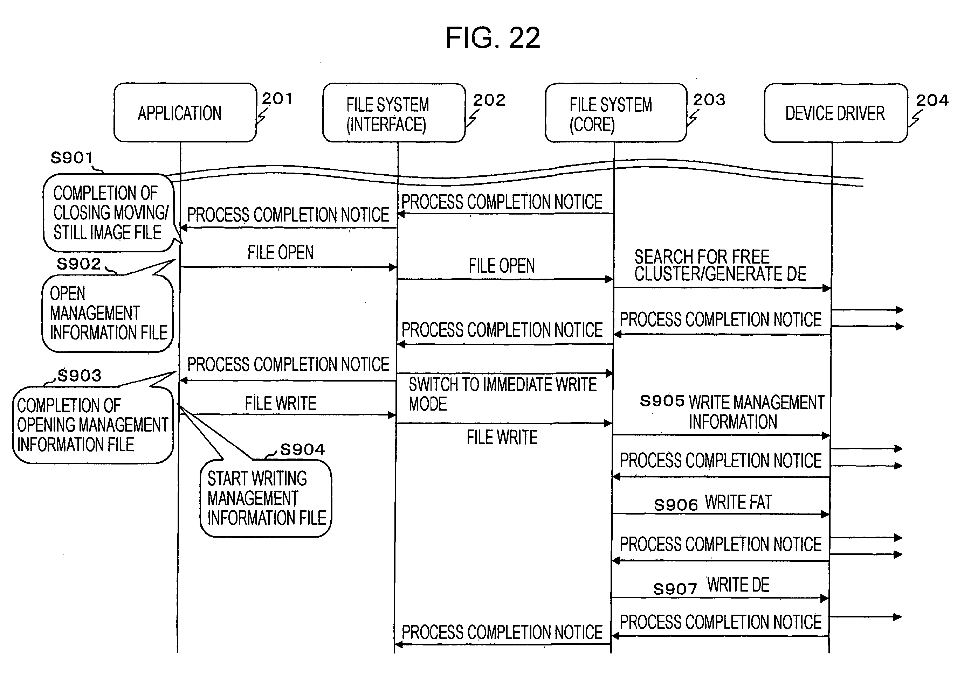

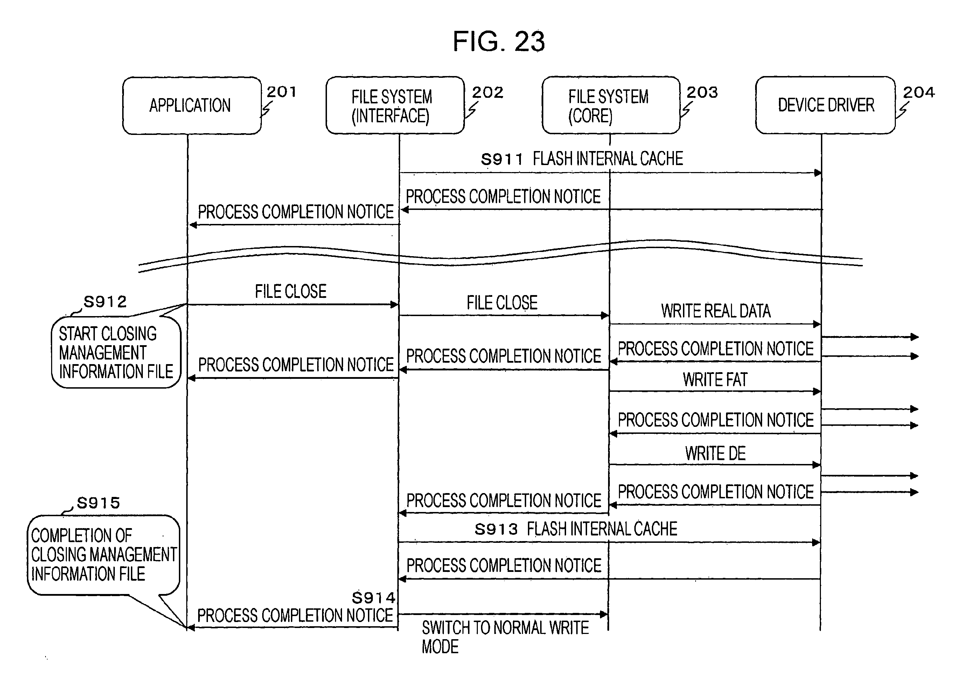

Hereinafter, an entire sequence of writing management information, such as index information of recorded files, is described with reference to the sequence diagrams shown in Figs. 22 and 23. This sequence corresponds to the entire process of opening and closing a file described above with reference to Figs. 20A and 20B.

Before writing management information, such as index information of recorded files, the application 201 performs a process of closing a moving/still image file in step S901. Then, a process of opening a management information file is performed in step S902. This step corresponds to the flowchart shown in Fig. 20A. The file system (interface) 202 switches the mode to the immediate write mode, and the process of opening the management information file completes in step S903 after the application 201 has received a process completion notice.

Then, write of management information in the file starts in step S904. This process is performed in the immediate write mode. More specifically, the file system (interface) 202 outputs a file write command to the system file (core) 203. Then, the file system (core) 203, which is set in the immediate write mode, writes management information in the immediate write mode in step S905, and also writes file system information on the information recording medium in steps S906 and S907. That is, FAT information (S906) and a directory entry (S907) that are updated and have the latest information are written on the information recording medium.

After the file system information has been written, a process completion notice is transmitted to the file system (interface) 202, and then the file system (interface) 202 performs a process of flashing the internal cache in step S911 shown in Fig. 23. That is, the file system (interface) 202 performs a cache flash process to complete write of the information recorded in the internal cache on the information recording medium. Accordingly, the FAT and the directory entry (DE) information can be reliably reflected on the information recording medium.

Then, write of management information continues in the immediate write mode. In step S912, when recording of all management information completes, the application 201 performs a process of closing the management information file. This closing process is performed in accordance with the flowchart shown in Fig. 20B.

The file system (interface) 202 outputs a file close command to the file system (core) 203. The file system (core) 203 writes file system information on the information recording medium after writing management information. Then, the file system (interface) 202 performs a process of flashing the internal cache in step S913 shown in Fig. 23, switches the mode to the normal write mode in step S914, and then transmits a process completion notice to the application 201. The application 201 completes the process of closing the management information file on the basis of the reception of the notice.

As described above, in this example, a cache flash process is performed to complete write of information recorded in the internal cache on the information recording medium at closing the file, so that a FAT and directory entry (DE) information can be reliably reflected on the information recording medium. Note that, as described above with reference to Figs. 21A and 21B, the management information may be written without using the internal cache, so that loss of data in the internal cache can be prevented even if the power is shut off and that occurrence of a write error can be prevented.

### <4. Examples of configuration of information processing apparatus>

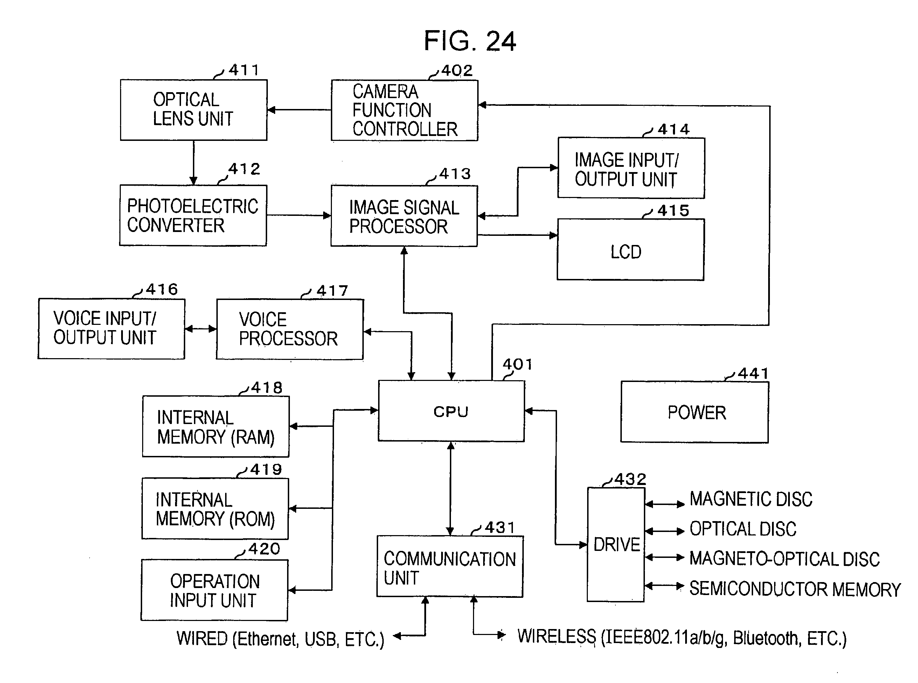

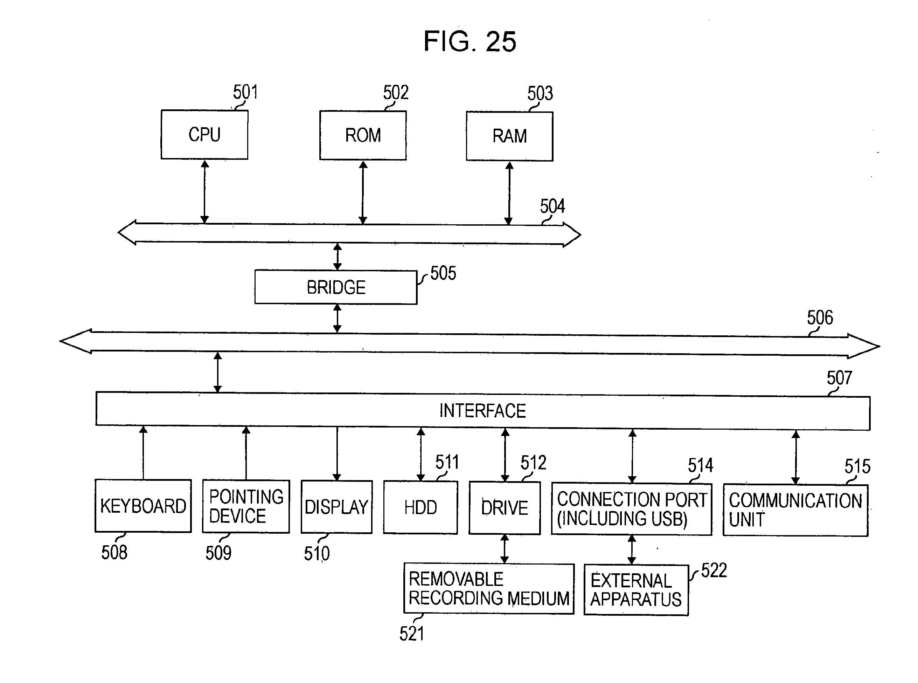

Hereinafter, exemplary configurations of a digital video camera and a PC (personal computer) are described as examples of a configuration of the information processing apparatus performing the above-described processes, with reference to Figs. 24 and 25.

First, an example of a configuration of a digital video camera is described with reference to Fig. 24. The digital video camera performs an image pickup mode of picking up images and recording image data obtained by pickup on various types of information recording media, such as a magnetic disc, an optical disc, a magneto-optical disc, and a semiconductor memory, via a drive 432; and a VTR mode of recording data supplied via an image input/output unit 414, a voice input/output unit 416, or a communication unit 431 on a recording medium and playing back data recorded on the recording medium.

The image pickup mode includes a moving image pickup mode of picking up moving images and recording the images together with voice collected at the same time on a recording medium; and a still image pickup mode of picking up still images. In the VTR mode, supplied data is recorded by operating an operation input unit 420 including a recording button switch and so on, and desired data recorded on the recording medium can be played back by operating a playback button switch.

As shown in Fig. 24, the digital video camera includes an optical lens unit 411, a photoelectric converter 412, a camera function controller 402, an image signal processor 413, the image input/output unit 414, a liquid crystal display (LCD) 415, the voice input/output unit 416, a voice signal processor 417, the communication unit 431, a control unit (CPU) 401, an internal memory (RAM) 418, an internal memory (ROM) 419, an operation input unit 420, the drive 432 for information recording media, and a power supply 441 to supply power to each unit.

The control unit (CPU) 401 performs processes in accordance with various process programs stored in the ROM 419. The RAM 418 is mainly used as a work area to temporarily store an intermediate result in each process.

The operation input unit 420 includes various operation keys and function keys, e.g., a mode switching key to switch operation modes, such as a moving image shooting mode, a still image shooting mode, and a VTR mode; a shutter key to shoot still images; a shooting start key to shoot moving images; a recording key; a playback key; a stop key; a fast-forward key; and a fast-rewind key. The operation input unit 420 receives an operation input by a user and supplies an electric signal corresponding to the operation to the control unit (CPU) 401.

The control unit (CPU) 401 reads a program to perform a desired process from the ROM 419 in accordance with an operation input by the user and executes the program. The control unit (CPU) 401 controls each unit so as to control a process in accordance with instructions from the user. Various types of information recording media, such as a magnetic disc, an optical disc, a magneto-optical disc, and a semiconductor memory, can be loaded in the digital video camera. The digital video camera records various information on these types of recording media via the drive 432 and plays back information recorded thereon.

Hereinafter, an example of a hardware configuration of a PC, which is an example of the information processing apparatus performing the above-described processes, is described with reference to Fig. 25. A CPU (central processing unit) 501 functions as a data processing unit to perform a process according to an OS (operating system) and to record or play back data using different files described above. These processes are executed in accordance with a computer program that is stored in a data storing unit, such as a ROM or a hard disk, of the information processing apparatus.

A ROM (read only memory) 502 stores programs and operation parameters used by the CPU 501. A RAM (random access memory) 503 stores programs used in execution of the CPU 501 and parameters changing in the execution. The CPU 501, the ROM 502, and the RAM 503 are connected to each other via a host bus 504 including a CPU bus or the like.

The host bus 504 connects to an external bus 506, which is a PCI (peripheral component interconnect/interface) bus or the like, via a bridge 505.

A keyboard 508 and a pointing device 509 are input devices operated by a user. A display 510 includes a liquid crystal display device or a CRT (cathode ray tube) and displays various information by text or image.

A HDD (hard disk drive) 511 includes a hard disk, drives the hard disk, and allows a program executed by the CPU 501 or information to be recorded or played back. The hard disk is used as a storage area of an image data file and stores various computer programs, such as a data processing program.

A drive 512 reads data or a program recorded on a removable recording medium 521, such as a magnetic disc, an optical disc, a magneto-optical disc, or a semiconductor memory, and supplies the data or the program to the RAM 503 via an interface 507, the external bus 506, the bridge 505, and the host bus 504.

A connection port 514 is a port to connect an external apparatus 522 and includes connection units of USB, IEEE1394, and the like. The connection port 514 connects to the CPU 501 and so on via the interface 507, the external bus 506, the bridge 505, and the host bus 504. A communication unit 515 connects to a network and communicates with other information processing apparatuses.

The configurations of the information processing apparatuses shown in Figs. 24 and 25 are only examples. The configuration of the information processing apparatus is not limited to that shown in Fig. 24 or 25, but another configuration may be applied as long as the apparatus is capable of performing the processes described in the above embodiment.

The present invention has been described in detail with reference to a specific embodiment. However, it should be understood by those skilled in the art that various modifications, combinations, sub-combinations and alterations may occur depending on design requirements and other factors insofar as they are within the scope of the appended claims or the equivalents thereof.

The series of processes described above in this specification can be performed by hardware, software, or a combination of hardware and software. When the processes are performed by software, a program including a process sequence can be installed in a memory of a computer incorporated in a dedicated hardware so as to be executed, or can be installed in a multi-purpose computer capable of performing various processes so as to be executed.

For example, the program can be recorded in advance in a hard disk or a ROM as a recording medium. Alternatively, the program can be temporarily or permanently stored (recorded) on a removable recording medium, such as a flexible disk, a CD-ROM (compact disc read only memory), an MO (magneto optical) disc, a DVD (digital versatile disc), a magnetic disc, or a semiconductor memory. These types of removable recording media can be provided as so-called package software.

The program can be installed from the above-described removable medium to a computer, can be wirelessly transferred from a download site to the computer, or can be transferred in a wired manner through a network, such as a LAN (local area network) or the Internet. The computer can receive the transferred program and install the program in a recording medium, such as an internal hard disk.

The various processes described in this specification may be performed in time series in accordance with the described order. Alternatively, the processes may be performed in parallel or individually in accordance with a processing ability of an apparatus performing the processes or as necessary. In this specification, the system means a logical set of a plurality of apparatuses, and the apparatuses need not always be placed in the same package.

The present invention contains subject matter related to Japanese Patent Application JP 2005-310826 filed in the Japanese Patent Office on October 26, 2005, the entire contents of which are incorporated herein by reference.

## Claims

1. An information processing apparatus comprising:
a recording control unit configured to control recording of information on an information recording medium and recording of file system information corresponding to a file storing the recorded information,
wherein the recording control unit performs a sequential recording process of the file system information by switching between two modes of writing information on the information recording medium in accordance with a preset condition, the two modes including
(a) a normal write mode where the file system information is not preferentially recorded; and
(b) an immediate write mode where the file system information is preferentially recorded.

2. The information processing apparatus according to Claim 1,
wherein the recording control unit performs the sequential recording process of the file system information by switching the mode from the normal write mode to the immediate write mode on the basis of at least any of a count value, indicating the number of data recording commands issued from start of the normal write mode, and a timer value, indicating elapsed time from start of the normal write mode.

3. The information processing apparatus according to Claim 2,
wherein the recording control unit compares a threshold that varies depending on the type of information recorded on the information recording medium with at least any of the count value and the timer value, and switches the mode from the normal write mode to the immediate write mode in accordance with the comparison result.

4. The information processing apparatus according to Claim 1,
wherein, in the immediate write mode, the recording control unit controls a write process of the file system information on the information recording medium and performs a cache flash process to complete writing information stored in a cache in an information recording medium driving unit on the information recording medium.

5. The information processing apparatus according to Claim 4,
wherein the recording control unit switches the mode to the normal write mode after performing the write process of the file system information on the information recording medium in the immediate write mode and the cache flash process.

6. The information processing apparatus according to Claim 1,
wherein, in the immediate write mode, the recording control unit performs a write process of the file system information on the information recording medium, the file system information including a file allocation table and a directory entry.

7. The information processing apparatus according to Claim 1,
wherein the recording control unit holds file size information indicating the size of file written on the information recording medium, and
wherein the recording control unit performs a file seek at restart of writing information after a pause of writing information on the basis of the file size information at completion of the last immediate write mode before the pause, so as to ensure the continuity at an information writing position.

8. The information processing apparatus according to Claim 1, further comprising:
a buffer configured to temporarily store data to be recorded on the information recording medium; and
an application executing unit configured to output an execution command of an information recording process on the information recording medium,
wherein the application executing unit holds a pointer indicating a data recording end position at completion of the immediate write mode, the pointer corresponding to the data stored in the buffer, and performs a process by using the pointer as a write start position at restart of writing information after a pause of an information writing process.

9. The information processing apparatus according to Claim 1,
wherein the recording control unit writes management information on the information recording medium by applying the immediate write mode.

10. The information processing apparatus according to Claim 1,
wherein the recording control unit sets the immediate write mode when opening a file in which information is to be recorded, and performs a cache flash process to complete writing information stored in a cache in an information recording medium driving unit on the information recording medium during a file closing process.

11. The information processing apparatus according to Claim 1,
wherein the recording control unit sets the immediate write mode and performs setting so as to prohibit use of a cache in an information recording medium driving unit when opening a file in which information is to be recorded, and performs control so that information is written without using the cache.

12. An information processing method comprising the step of:
controlling recording of information on an information recording medium and recording of file system information corresponding to a file storing the recorded information,
wherein the recording control step performs a sequential recording process of the file system information by switching between two modes of writing information on the information recording medium in accordance with a preset condition, the two modes including
(a) a normal write mode where the file system information is not preferentially recorded; and
(b) an immediate write mode where the file system information is preferentially recorded.

13. The information processing method according to Claim 12,
wherein the recording control step includes the step of performing the sequential recording process of the file system information by switching the mode from the normal write mode to the immediate write mode on the basis of at least any of a count value, indicating the number of data recording commands issued from start of the normal write mode, and a timer value, indicating elapsed time from start of the normal write mode.

14. The information processing method according to Claim 13,
wherein the recording control step includes the step of comparing a threshold that varies depending on the type of information recorded on the information recording medium with at least any of the count value and the timer value, and switching the mode from the normal write mode to the immediate write mode in accordance with the comparison result.

15. The information processing method according to Claim 12,
wherein, in the immediate write mode, the recording control step includes the step of controlling a write process of the file system information on the information recording medium and performing a cache flash process to complete writing information stored in a cache in an information recording medium driving unit on the information recording medium.

16. The information processing method according to Claim 15,
wherein the recording control step includes the step of switching the mode to the normal write mode after performing the write process of the file system information on the information recording medium in the immediate write mode and the cache flash process.

17. The information process-ing method according to Claim 12,
wherein, in the immediate write mode, the recording control step includes the step of performing a write process of the file system information on the information recording medium, the file system information including a file allocation table and a directory entry.

18. The information processing method according to Claim 12,
wherein the recording control step includes the step of holding file size information indicating the size of file written on the information recording medium, and
performing a file seek at restart of writing information after a pause of writing information on the basis of the file size information at completion of the last immediate write mode before the pause, so as to ensure the continuity at an information writing position.

19. The information processing method according to Claim 12, further comprising the steps of:
holding a pointer indicating a data recording end position at completion of the immediate write mode, the pointer corresponding to a buffer temporarily storing data to be recorded on the information recording medium; and
performing a process by using the pointer as a write start position at restart of writing information after a pause of an information writing process.

20. The information processing method according to Claim 12, further comprising the step of:
writing management information on the information recording medium by applying the immediate write mode.

21. The information processing method according to Claim 12, further comprising the step of:
setting the immediate write mode when opening a file in which information is to be recorded and performing a cache flash process to complete writing information stored in a cache in an information recording medium driving unit on the information recording medium during a file closing process.

22. The information processing method according to Claim 12, further comprising the step of:
setting the immediate write mode and performing setting so as to prohibit use of a cache in an information recording medium driving unit when opening a file in which information is to be recorded, and writing information without using the cache.

23. A computer program allowing an information processing apparatus to control an information recording process, the program comprising the step of:
controlling recording of information on an information recording medium and recording of file system information corresponding to a file storing the recorded information,
wherein the recording control step performs a sequential recording process of the file system information by switching between two modes of writing information on the information recording medium in accordance with a preset condition, the two modes including
(a) a normal write mode where the file system information is not preferentially recorded; and
(b) an immediate write mode where the file system information is preferentially recorded.
